Europäisches Patentamt

European Patent Office

Office européen des brevets

(19)

(11) **EP 0 544 991 B1**

(12) **EUROPÄISCHE PATENTSCHRIFT**

(45) Veröffentlichungstag und Bekanntmachung des Hinweises auf die Patenterteilung:
**01.10.1997 Patentblatt 1997/40**

(51) Int Cl.⁶: **H04L 27/00**

(21) Anmeldenummer: **92111987.1**

(22) Anmeldetag: **14.07.1992**

(54) **Verfahren zur automatischen Klassifikation digital modulierter Signale und Anordnung zum Ausführen des Verfahrens**

Method for the automatic classification of digitally modulated signals, and apparatus to carry out the method

Procédé pour la classification automatique de signaux modulés numériquement, et dispositif de mise en oeuvre du procédé

(84) Benannte Vertragsstaaten:
**DE**

(30) Priorität: **29.11.1991 DE 4139511**

(43) Veröffentlichungstag der Anmeldung:
**09.06.1993 Patentblatt 1993/23**

(73) Patentinhaber: **Daimler-Benz Aerospace Aktiengesellschaft**
**81663 München (DE)**

(72) Erfinder: **Reichert, Jürgen, Dipl.-Ing.**
**W-6369 Nidderau 2 (DE)**

(74) Vertreter: **Schulze, Harald Rudolf, Dipl.-Ing. et al**
**Daimler-Benz Aerospace AG**
**Patentabteilung**
**Sedanstrasse 10**
**89077 Ulm (DE)**

(56) Entgegenhaltungen:
- **SIGNAL PROCESSING. EUROPEAN JOURNAL DEVOTED TO THE METHODS AND APPLICATIONS OF SIGNAL PROCESSING Bd. 9, Nr. 3, Oktober 1985, AMSTERDAM NL Seiten 177 - 190 F. JONDRAL: 'Automatic Classification of High Frequency Signals.'**
- **SIGNAL PROCESSING. EUROPEAN JOURNAL DEVOTED TO THE METHODS AND APPLICATIONS OF SIGNAL PROCESSING Bd. 22, Nr. 3, Maerz 1991, AMSTERDAM NL Seiten 239 - 250 L.V. DOMINGUEZ ET AL.: 'A general approach to the automatic classification of radiocommunication signals.'**
- **SIGNAL PROCESSING. EUROPEAN JOURNAL DEVOTED TO THE METHODS AND APPLICATIONS OF SIGNAL PROCESSING Bd. 16, Nr. 2, Februar 1989, AMSTERDAM NL Seiten 149 - 154 Y. T. CHAN / L. G. GADBOIS: 'Indentification of the modulation type of a signal.'**
- **PROCEEDINGS OF THE IEEE. Bd. 70, Nr. 9, September 1982, NEW YORK US Seiten 975 - 989 D. W. TUFTS / R. KUMARESAN: 'Estimation of Frequencies of Multiple Sinusoids: Making Linear Prediction Perform Like Maximum Likelihood.'**

**Beschreibung**

Die Erfindung betrifft ein Verfahren zur automatischen Klassifikation digital modulierter Signale gemäß Oberbegriff des Patentanspruchs 1 sowie eine Anordnung zum Ausführen des Verfahrens gemäß Oberbegriff des Patentanspruchs 25. Ein solches Verfahren und eine solche Anordnung sind bereits aus F. Jondral: "Automatic Classification of High Frequency Signals"; Signal Processing, vol. 9, pp. 177-190, 1985 bekannt.

Zur Übertragung werden Nachrichten entsprechend einer Modulationsart umgeformt. Um zu erkennen, daß Nachrichten gemäß einer bestimmten Modulationsart gesendet werden oder um Nachrichten ihrer Modulationsart entsprechend richtig zu demodulieren, ist es notwendig, die Modulationsart von Signalen zu erkennen.

Die bekannten Verfahren zur automatischen Klassifikation von digital modulierten Signalen bauen zumeist auf einer versuchten Demodulation auf. Gelingt der Versuch der Demodulation, so wird auf die entsprechende Modulationsart erkannt, ansonsten das Signal als nicht klassifizierbar rückgewiesen.

Die meisten bisher aus der Literatur bekannten Verfahren benutzen "offensichtlich" günstige Merkmale wie z.B. die Histogramme oder Momente der gemessenen Amplituden und Phasenverteilungen als Eingangsgrößen für einen sich auf eine Lernstichprobe adaptierenden Mustererkennungsalgorithmus (vgl. z.B.: den bereits erwähnten Artikel von F. Jondral: "Automatic Classification of High Frequency Signals"; Signal Processing, vol. 9, pp. 177-190, 1985 sowie L. V. Dominguez, et. al.: "A General Approach to Automatic Classification of Radiocommunication Signals"; Signal Processing, vol. 22, pp. 239-250, 1991, und T. G. Callaghan, J. L. Perry: "Modulation Recognition for Automated Surveillance Systems"; Watkins-Johnson Techn-notes, vol. 12, No. 4, July/August, 1985) . Diese Verfahren weisen einige Nachteile auf. Es sind dies im wesentlichen:

a) Die Analyse der Klassifikationsleistung ist nur auf dem Weg der Simulation möglich. Eine explizite Angabe der Entdeckungswahrscheinlichkeit $P_D$ und Falschalarmrate $P_F$ ist praktisch nicht möglich.

b) Eine repräsentative Lernstichprobe ist erforderlich, um den Modulationsklassifikator zu trainieren.

Andere Ansätze versuchen, Merkmale aus den berechneten Verteilungsdichten von Amplitude oder Momentanphase abzuleiten und diese nachzumessen (vgl. z.B. K. Kim, A. Polydoros: "On the Detection and Classification of Quadrature Digital Modulations in Broad-Band Noise"; IEEE Trans. on Communications, vol. COM-38, pp. 1199-1211, 1990 und Y. Yang, S. Soliman: "Optimum Classifier for M-ary PSK Signals"; Proceedings of the International Conference on Communications ICC, pp. 1693-1697, 1991). Diese Verfahren gehen in der Regel von der Kenntnis der Träger- und Symbolsynchronisation aus, um die Analyse berechenbar zu halten. In dem oben angeführten Artikel von K. Kim, A. Polydoros wurde ferner erwähnt, daß für den dort beschriebenen Delay- und Multiply-Detektor durch geschickte Wahl der Zeitverzögerung modulationsartenabhängige Spektrallinien erzeugt werden können. Das dort erwähnte Verfahren basiert allerdings auf der Verarbeitung reeller Nachrichtensignale und weist damit die bekannten Probleme der Überfaltung der Einzelspektren auf. Der Versuch einer statistischen Analyse des Klassifikators ist für analoge Modulationen ebenfalls bereits bekannt (vgl. z.B. Y. T. Chan, L. G. Gadbois: "Identification of the Modulation Type of a Signal"; Signal processing, vol. 16, pp. 149-154, 1989 und J. Aisbett: "Automatic Modulation Recognition Using Time Domain Parameters"; Signal Processing, vol. 13, pp. 323-328, 1987).

Ein weiterer Ansatz besteht in der Untersuchung verschiedener, zunächst willkürlich gewählter Merkmale mittels eines statistischen Analyseprogramms auf maximale Unterscheidbarkeit (vgl. z.B. J. E. Hipp: "Modulation Classification Based on Statistical Moments"; IEEE MILCOM Conference Proceedings, 1986). Die Merkmale, die nach dieser Analyse als informationshaltig erkannt werden, bilden die Merkmale zur Klassifikation.

Allen diesen bekannten Verfahren ist gemeinsam, daß sie bei schlechtem Signal-zu-Rausch-Verhältnis S/N relativ schlechte Ergebnisse liefern.

Bei dem aus F. Jondral: "Automatic Classification of High Frequency Signals"; Signal Processing, vol. 9, pp. 177-190, 1985 (vgl. hierzu auch: DE 34 03 187 A1) bekannten Verfahren wird ein aus dem digital modulierten Signal abgeleitetes und nach einer bestimmten, anfangs noch unbekannten Modulationsart moduliertes komplexes Nachrichtensignal r in mehrere, voneinander unabhängig weiterverarbeitete Zwischensignale transformiert, und zwar wird eine nichtlineare Transformation des Real- und Imaginärteils des komplexen Nachrichtensignals r durchgeführt, um den Betrag und die Phase des Signals berechnen zu können. Die so gewonnenen Zwischensignale bilden die Grundlage für die Bestimmung der Modulationsart in einer nachgeschalteten Auswerteschaltung. Die Frequenzlage des komplexen Nachrichtensignals liegt im allgemeinen zwar im Bereich des entsprechenden bei bekannter Trägerfrequenz in üblicher Art ableitbaren, komplexen Basisbandsignals, ist jedoch in der Regel nicht identisch mit dem Basisbandsignal, da die Trägerfrequenz des zu klassifizierenden Signals à priori unbekannt ist und zunächst geschätzt werden muß mit der Folge, daß je nach Güte der Schätzung das komplexe Nachrichtensignal bei einer "transformierten" Trägerfrequenz in der Nähe von Null, aber verschieden von Null erscheint.

Die Berechnung des Betrags und der Phase aus dem komplexen Nachrichtensignal r ist in der Regel sehr rechenintensiv. Es existieren nur iterative Algorithmen. Diese besitzen entweder lineare Konvergenz (wie z.B. der für den in dem Artikel von T.C. Chen: "Automatic Computation of Exponentials, Logarithms, Ratios and Square Roots", IBM J. Res. Develop., vol. 16 No. 4, pp. 380-388, July 1972 beschriebenen COordinate-Rotation-DIgital-Computer (CORDIC) verwendete Algorithmus) und benötigen deshalb mindestens ebensoviele Rechenschritte wie die Genauigkeit des Ergebnisses sein soll oder quadratische Konvergenz mit der Unterstützung von Tabellen, die abgelegt werden müssen.

Außerdem verstärkt die nichtlineare Transformation von Real- und Imaginärteil des komplexen Nachrichtensignals r in Betrag und Phase das Rauschen. Schwankt die Amplitude des Nutzsignals, so wird bei kleinen Amplitudenwerten das Rauschen im Gesamtsignal überwiegen und entsprechend die Phase bestimmen. In der Phasenauswertung werden dann vollkommen falsche Phasen mit Phasen hoher Güte gleich gewichtet. So kommt es auch bei diesem bekannten Verfahren bei niedrigem Signal-zu-Rausch-Verhältnissen S/R eher zu falschen Ergebnissen.

Die Aufgabe der Erfindung besteht darin, zum einen ein Verfahren der eingangs genannten Art zu schaffen, das möglichst hohe Zuverlässigkeit bei der Modulationsartenerkennung aufweist, sowie eine Anordnung zum Ausführen des Verfahrens zu schaffen, die möglichst einfach im Aufbau ist.

Die erfindungsgemäße Lösung der Aufgabe ist in bezug auf das zu schaffende Verfahren durch die kennzeichnenden Merkmale des Patentanspruchs 1 sowie in bezug auf die zu schaffende Anordnung durch die kennzeichnenden Merkmale des Patentanspruchs 25 wiedergegeben. In den weiteren Ansprüchen sind vorteilhafte Aus- und Weiterbildungen des erfindungsgemäßen Verfahrens (Ansprüche 2-24) sowie der erfindungsgemäßen Anordnung (Ansprüche 26-31) beschrieben.

Das eingangs genannte Verfahren nach F. Jondral zur automatischen Klassifikation digital modulierter Signale, bei dem ein aus dem digital modulierten Signal abgeleitetes und nach einer bestimmten, anfangs noch unbekannten digitalen Modulationsart moduliertes komplexes Nachrichtensignal in mehrere Zwischensignale transformiert wird, wobei das komplexe Nachrichtensignal und die mehreren Zwischensignale unabhängig voneinander weiter verarbeitet werden und dabei die Grundlage für die Bestimmung der Modulationsart in einem Klassifikator bilden, wobei die komplexe Einhüllende des komplexen Nachrichtensignals im Zustandsdiagramm in der komplexen Ebene nur eine beschränkte Anzahl von gleichwahrscheinlichen und voneinander unabhängigen Zuständen einnimmt, wird nach der Erfindung dahingehend verbessert,

a) daß als Transformationen diejenigen Transformationen ausgewählt werden, die jeweils für mindestens eine der zu erkennenden Modulationsarten im Zustandsdiagramm die symmetrisch zum Ursprung der komplexen Ebene liegenden Zustände in eine geringere Anzahl von Zuständen überführen, die unsymmetrisch zum Ursprung liegen;
b) daß aus dem komplexen Nachrichtensignal und/oder den Zwischensignalen die jeweils zugehörigen Leistungsdichtespektren geschätzt werden;
c) daß die einzelnen Leistungsdichtespektren auf die Existenz von Linien untersucht werden und deren Anzahl und/oder Frequenzlage und/oder Amplitude und/oder Leistung festgestellt und in Form eines Merkmalvektors an den Klassifikator weitergegeben werden;
d) daß der Klassifikator anhand der Merkmalvektoren die Modulationsart bestimmt.

Ein wesentlicher Vorteil der Erfindung ist darin zu sehen, daß digital modulierte Signale sehr einfach und schnell sowie mit einer sehr hohen Wahrscheinlichkeit (die ohne weiteres bei 95 % oder mehr liegen kann) richtig klassifiziert werden können.

Weitere Vorteile des erfindungsgemäßen Verfahrens ergeben sich daraus, daß generell für jedes vorgegebene Signalmodell die Klassifikationsleistung vorbestimmt werden kann. Ist z.B. für den Fall der Schätzung der Leistungsdichtespektren mittels der Diskreten Fouriertransformation (DFT), z.B. mittels eines Fast-Fourier-Transformationsverfahrens (FFT) in Form von Periodogrammen das Verhältnis der Linienleistung zur Rauschleistungsdichte an den entsprechenden Periodogrammstellen bekannt, an denen sich jeweils eine Linie befindet, so kann umgekehrt auch angegeben werden, wie groß die Anzahl der Abtastwerte $N_{FFT}$ (entspricht der FFT-Länge) für die Schätzung der Leistungsdichtespektren sein muß, um bei vorgegebener Falschalarmrate $P_F$ eine bestimmte Entdeckungswahrscheinlichkeit $P_{D,s}$ für eine Linie zu erzielen. Daraus kann die Entdeckungswahrscheinlichkeit $P_D$ der Modulationsart errechnet werden. Das Verfahren ist aufgrund der Wahl der robusten Merkmale und Detektionsalgorithmen relativ unempfindlich gegenüber Schwankungen der unbekannten Modulationsparameter (z.B. Trägerfrequenz $f_c$ bzw. Symbolfrequenz $f_s$) und der Rauschumgebung. Die Kenntnis der Trägerfrequenz und Symbolsynchronisation ist nicht notwendig. Neben der Modulationsart können die Trägerfrequenz $f_c$ und (in einer vorteilhaften Weiterbildung der Erfindung) auch die Symbolfrequenz $f_s$ geschätzt werden. Die Erweiterung auf Nichtlinearitäten höherer Ordnung führt zur Erkennung von höherwertigen PSK-Signalen.

In einer besonderen Ausführungsform des erfindungsgemäßen Verfahrens werden die einzelnen Zwischensignale zweckmäßigerweise jeweils durch eine lineare oder nichtlineare Transformation aus dem komplexen Nachrichtensignal r erzeugt, wobei vorzugsweise die Mehrzahl der Transformationen nichtlineare Transformationen von vorzugsweise niederer Ordnung, vorzugsweise von erster, zweiter, dritter oder vierter Ordnung sind.

Die einzelnen Transformationen können zeitlich parallel und/oder vorzugsweise zeitlich hintereinander durchgeführt werden.

Das der Erfindung zugrunde liegende Prinzip beruht auf der Eigenschaft digital modulierter Signale, daß bei voll geöffnetem Augendiagramm an äquidistanten Zeitpunkten (=Symbolabstand $T_S$) nur eine beschränkte Anzahl von Zuständen durch die komplexe Einhüllende des komplexen Nachrichtensignals r in der komplexen Ebene eingenommen werden können. Diese Periodizität äußert sich bei den meisten Modulationsarten zunächst lediglich in einer periodischen Wiederholung der Signalstatistiken. Man spricht auch von clostationären Zeitsignalen (vgl. hierzu: W. A. Gardner: "The Spectral Correlation Theory of Cyclostationary Time-Series"; Signal Processing (J. EURASIP), vol. 11, no. 1, July 1986, pp 13-36). Die im Signal enthaltene periodische Struktur kann sich bei unsymmetrischen Zuständen (z.B. bei ASK = Amplitude-Shift-Keying) im Zustandsdiagramm durch eine Spektrallinie im zugehörigen Leistungsdichtespektrum äußern. Bei den meisten der übrigen digitalen Modulationsarten (2PSK, 4PSK, MSK; PSK=Phase-Shift-Keying, MSK=Minimum-Shift-Keying) allerdings liegen die (voneinander unabhängigen und gleichwahrscheinlichen) Zustände symmetrisch und es tritt keine Spektrallinie im zugehörigen Leistungsdichtespektrum auf. Man spricht hier auch von versteckten Periodizitäten. Gelingt es nun, diese versteckten Periodizitäten in "meßbare" Periodizitäten umzuwandeln, welche sich als Linie im zugehörigen Leistungsdichtespektrum zeigen, so ist es möglich, aus der Kenntnis der Transformationen und der so erzeugten Linien auf die Modulationsart zu schließen. Als Transformationen bieten sich nach der Erfindung solche an, die im Zustandsdiagramm die symmetrisch zum Ursprung liegenden Zustände in eine geringere Anzahl überführen, welche unsymmetrisch zum Ursprung liegen und damit einen Gleichanteil im transformierten Zeitsignal verursachen. Dieser äußert sich als Linie im Leistungsdichtespektrum des transformierten komplexen Nachrichtensignals. Insbesondere zur Erkennung der digitalen Modulationsarten 2ASK, 2PSK, 4PSK, MSK und 2FSK (FSK=Frequency-Shift-Keying) werden vorteilhafterweise die Transformationen r, $r^2$, $r^4$ und $|r|^2$ auf das komplexe Nachrichtensignal r angewendet, wobei erstere Transformation (r) eine lineare Transformation ist und die letzteren Transformationen ($r^2$, $r^4$, $|r|^2$) nichtlineare Transformationen sind, jeweils angewandt auf das komplexe Nachrichtensignal r(t). Wie weiter unten gezeigt wird, ist die komplexe Signalverarbeitung außerordentlich wichtig, weil nur so das zusätzliche Entstehen von Linien bei der Frequenz 0 durch den immer vorhandenen Gleichanteil im quadrierten reellen Signal verhindert wird. Außerdem ergibt sich, daß z.B. die Transformation $r^2$, angewandt auf den Betrag des komplexen Signals r(t), keine Unterschiede zwischen 2PSK und 4PSK erkennen läßt, denn alle Zustände im Zustandsdiagramm werden unabhängig von der Modulationsart auf einen einzigen Zustand abgebildet.

Im folgenden wird die Erfindung anhand der Figuren näher erläutert. Es zeigen:

FIG. 1     eine Tabelle mit den bei den digitalen Modulationarten 2ASK, 2PSK, 4PSK, MSK und 2FSK durch die Transformationen r, $r^2$, $r^4$ und $|r|^2$ des komplexen Nachrichtensignals r generierten Linien in den entsprechenden Leistungsdichtespektren $S^{(1)}$, $S^{(2)}$, $S^{(4)}$ und $S^{(2)}_{|r|}$ ;

FIG.2-3     eine vorteilhafte erste Ausführungsform eines auf der Tabelle nach FIG. 1 basierenden und für den Klassifikator bestimmten Auswerteschemas der in den einzelnen Leistungsdichtespektren festgestellten Linien in Form eines Flußdiagramms;

FIG. 4     eine bevorzugte Ausführungsform der erfindungsgemäßen Anordnung zur Ausführung des erfindungsgemäßen Verfahrens.

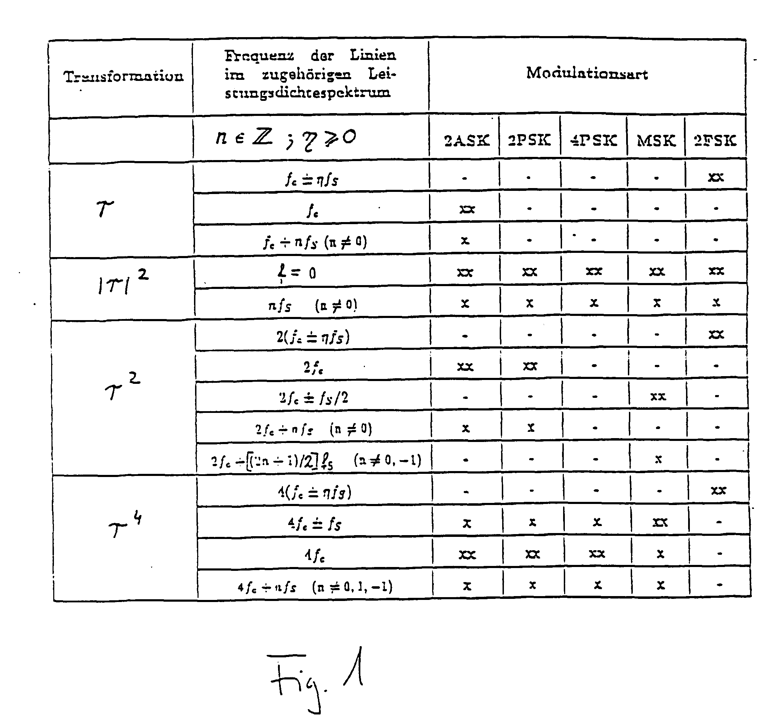

Die bei den im vorliegenden Fall (beispielhaft) zu klassifizierenden Modulationarten 2ASK, 2PSK, 4PSK, MSK und 2FSK durch die Transformationen r, $r^2$, $r^4$ und $|r|^2$ des komplexen Nachrichtensignals r entstehenden Linien und ihre Positionen in den zugehörigen Leistungsdichtespektren $S^{(1)}$, $S^{(2)}$, $S^{(4)}$ und $S^{(2)}_{|r|}$ sind in der Tabelle in FIG. 1 angeführt, wobei $S^{(1)}$, $S^{(2)}$ bzw. $S^{(4)}$ für die Leistungsdichtespektren stehen, die bei der Verwendung der Transformationen r, $r^2$ bzw. $r^4$ entstehen, und $S^{(2)}_{|r|}$ für das Leistungsdichtespektrum steht, das bei der Verwendung der Transformation $|r|^2$ entsteht, wobei $|r|^2$ das Betragsquadrat von r ist. In der Tabelle steht $f_c$ für die Trägerfrequenz, $f_s$ für die Symbolfrequenz, $\eta$ für den Modulationsindex; n kann die Werte 0, $\pm 1$, $\pm 2$, $\pm 3$ usw. annehmen.

Die 2FSK mit einem einseitigen Modulationsindex $\eta$ kann als Sonderfall der Superposition zweier gegensätzlich modulierter 2ASK-Signale mit Trägerfrequenzen $f_{c1}=f_c+\eta f_s$ und $f_{c2}=f_c-\eta f_s$ aufgefaßt werden. Dies führt im dichtespektrum $S^{(1)}$ des komplexen Nachrichtensignals r zu (mindestens) zwei Spektrallinien bei den Trägerfrequenzen $f_{c1}$ und $f_{c2}$ der beiden Einzelsignale. Da $\eta \cdot f_s$ bei 2FSK gleich dem Frequenzhub $\Delta f$ ist, kann somit aus den Spektren von 2FSK grundsätzlich immer der Frequenzhub $\Delta f$ bestimmt werden, sofern die Spektrallinien bei $f_c \pm \eta \cdot f_s$ detektiert werden können. Ist darüber hinaus auch noch der (einseitige) Modulationsindex $\eta$ bekannt, kann sogar auf die Symbolfrequenz $f_s$ rückgeschlossen werden (ähnliche Überlegungen führen dazu, daß aus MSK-Spektren grundsätzlich immer auch die Symbolfrequenz $f_s$ bestimmt werden kann). Diese Aussage gilt streng bei trägerphasenkohärenter 2FSK (CPC-2FSK=Carrier-Phase-Coherent-2FSK; Umschaltung zweier Oszillatoren) und bei 2FSK mit "kontinuierlicher" Phase (CP-2FSK=Continuous-Phase-2FSK), wenn der zweifache Modulationsindex $2\eta$ ganzzahlige Werte annimmmt. Bei anderen Werten des Modulationsindex $\eta$ enthält das Leistungsdichtespektrum $S^{(1)}$ des komplexen Nachrichtensignals

r keine erkennbaren diskreten Linien mehr, jedoch wird der kontinuierliche Anteil des Leistungsdichtespektrums mit größer werdendem Modulationsindex zunehmend spitzer mit Maxima bei $f_{1,2} \approx f_c \pm \eta \cdot f_s$ , was bei dem realisierten Linienendetektor zumeist als Linie erkannt wird.

In der Tabelle sind zwei Arten von Linien aufgeführt. Zum einen solche, die unabhängig von der Art der Tastung (hart oder weich) nach der Transformation immer mit relativ konstantem Pegel auftreten (in der Tabelle mit "xx" gekennzeichnet) und solche, die stark von der Art der verwendeten Tastung abhängig sind (in der Tabelle mit "x" gekennzeichnet). Ein Strich in der Tabelle bedeutet, daß die jeweils zugehörige Modulationsart (z.B. 4PSK) für die jeweils angegebene Transformation (z.B. $r^2$) bei der jeweils angeführten Frequenzlage (z.B. $2f_c$) keine Spektrallinie im jeweils zugehörigen Leistungsdichtespektrum (im Beispiel: $S^{(2)}$) erwarten läßt.

Die zusätzlichen, in der Tabelle mit "x" gekennzeichneten Linien werden durch Amplitudeneinbrüche bei weicher Tastung erzeugt und können bei hart getasteten Signalen im allgemeinen nicht beobachtet werden. Die vorzunehmende Klassifikation beschränkt sich deshalb zumindest in ihrer Grundausführung zweckmäßigerweise auf die Auswertung der mit "xx" gekennzeichneten, zuverlässig auftretenden Linien. Werden weitere Linien in äquidistanten Abständen gefunden, so können sie zur Erhöhung der Erkennungsqualität und zur Symbolfrequenzschätzung verwendet werden, da die Abstände dieser Linien mit der Symbolfrequenz $f_s$ verknüpft sind. Die zunächst ebenfalls unbekannte Trägerfrequenz $f_c$ wird durch die Position der mit "xx" gekennzeichneten Linien geschätzt. Auch hier zeigt sich ein wesentlicher Vorteil der Transformation des komplexen Signals: Bei der Verarbeitung des entsprechenden reellen Zeitsignals würden wesentlich mehr Linien auftreten, von denen sich nur ein Teil für die verschiedenen Modulationen unterscheidet. Mit anderen Worten sind die Leistungsdichtespektren von reell quadrierten Signalen weit weniger "unterscheidungskräftig" in bezug auf die Klassifikation digital modulierter Signale als die entsprechenden Leistungsdichtespektren von komplex quadrierten Signalen (vgl. hierzu den zuvor bereits erwähnten Artikel von K. Kim, A. Polydoros: "On the Detection and Classification of Quadrature Digital Modulations in Broad-Band Noise"; IEEE Trans. on Communications, vol. COM-38, pp. 1199-1211, 1990).

Die Tabelle zeigt außerdem, daß die (nicht lineare) Transformation $|r|^2$ für jede der in der Tabelle angegebenen digitalen Modulationsarten 2ASK, 2PSK, 4PSK, MSK und 2FSK Spektrallinien ("x") bei Vielfachen der Symbolfrequenz $n \cdot f_s$ ($n \neq 0$) sowie eine (robuste) Spektrallinie ("xx") bei der Frequenz f=0 (durch Quadrieren verursachter Gleichanteil) erzeugt.

Dieses Leistungsdichtespektrum $S^{(2)}_{|r|}$ enthält demnach zwar keine Unterscheidungsmerkmale zwischen den einzelnen angeführten digitalen Modulationsarten, erlaubt es jedoch, durch Auswertung der Symbolfrequenzlinien bei $n \cdot f_s$ ($n \neq 0$), diese digitalen Modulationsarten von analogen Modulationsarten zu unterscheiden. Erreicht wird dies mit der weiter unten beschriebenen Transformation $|r|^2 - E\{|r|^2\}$, da bei dieser Transformation die Spektrallinie bei der Frequenz f=0 durch Subtraktion des Gleichanteils unterdrückt wird ($E\{|r|^2\}$ ist gleich dem Erwartungswert von $|r(t)|^2$). Können mit anderen Worten im Leistungsdichtespektrum von $|r|^2 - E\{|r|^2\}$ Linien detektiert werden, so liegt mit einer hohen Wahrscheinlichkeit ein digital moduliertes Signal vor.

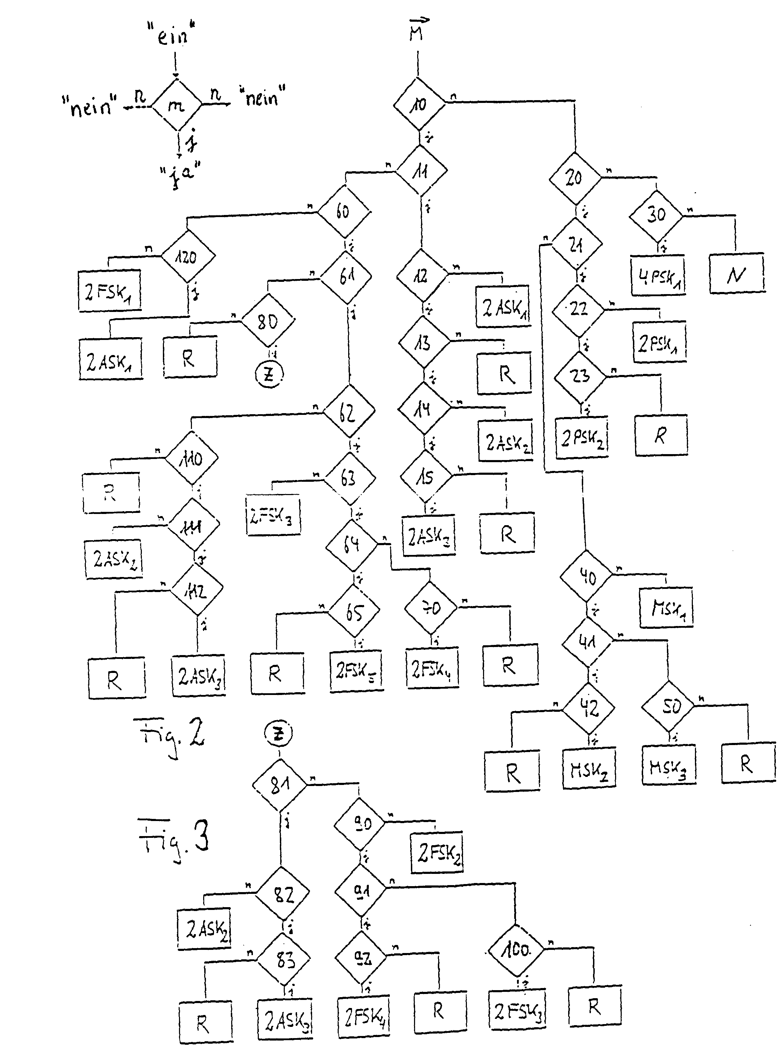

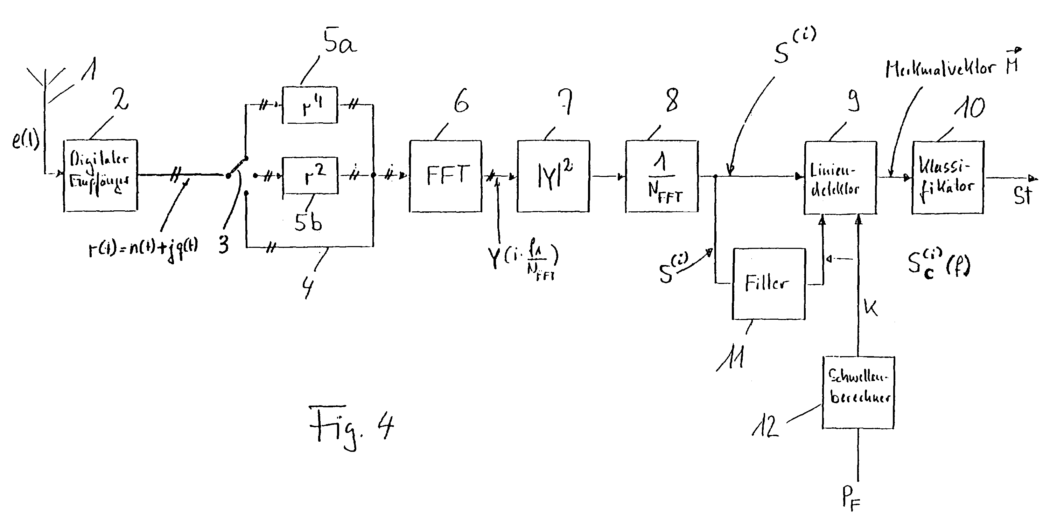

Die erzeugten Linien in den Leistungsdichtespektren der transformierten Signale werden detektiert und dienen zusammen mit deren Pegel und Frequenzlage als Merkmal für den Klassifikationsprozeß entsprechend der Tabelle in FIG. 1. Eine vorteilhafte erste Ausführungsform eines auf der Tabelle in FIG. 1 basierenden Auswerteschemas für die in den einzelnen Leistungsdichtespektren festgestellten Linien zeigen die Figuren 2 und 3 in Form eines Flußdiammes, das aufgebaut ist mit logischen Entscheidungen 10-120 (gekennzeichnet jeweils durch eine Raute, deren obere Spitze der Eingang bzw. deren untere Spitze der "ja"-Ausgang ist und deren seitliche Spitzen jeweils als "nein"-Ausgänge dienen) und mit Ausgabeblöcken (gekennzeichnet jeweils durch ein Rechteck) für 2ASK, 2PSK, 4PSK, MSK, FSK und NOISE (=Rauschen, d.h. keine Linien im Leistungsdichtespektrum feststellbar) sowie für die Rückweisung R unklassifizierbarer Signale.

Die Bedeutung der einzelnen logischen Entscheidungen sowie der einzelnen Ausgabeblöcke ergibt sich aus den beiden nachfolgenden Listen 1 und 2:

Liste 1 der logischen Entscheidungen 10-120 in den Figuren 2 und 3 und deren Bedeutung:

| logische Entscheidung (Bezugszeichen) | Bedeutung |
| --- | --- |
| 10 | mindestens 1 Linie in $S^{(1)}$ |
| 11 | genau 1 Linie in $S^{(1)}$ |
| 12 | mindesten 1 Linie in $S^{(2)}$ |
| 13 | $(f_1^{(2)} \approx 2 \cdot f_1^{(1)})$ |
| 14 | mindestens 1 Linie in $S^{(4)}$ |
| 15 | $(f_1^{(4)} \approx 4 \cdot f_1^{(1)})$ |
| 20 | mindestens 1 Linie in $S^{(2)}$ |
| 21 | 1 Linie in $S^{(2)}$ oder mindestens 2 Linien in $S^{(2)}$ mit $\lvert P(f_1^{(2)}) - P(f_2^{(2)}) \rvert \geq 6\text{dB}$ |
| 22 | mindestens 1 Linie in $S^{(4)}$ |
| 23 | $(f_1^{(4)} \approx 2 \cdot f_1^{(2)})$ |
| 30 | mindestens 1 Linie in $S^{(4)}$ |
| 40 | mindestens 1 Linie in $S^{(4)}$ |
| 41 | genau 1 Linie in $S^{(4)}$ |
| 42 | $(f_1^{(4)} \approx 2 \cdot f_1^{(2)})$ oder $(f_1^{(4)} \approx 2 \cdot f_2^{(2)})$ |
| 50 | $(f_1^{(4)} \approx 2 \cdot f_1^{(2)} \text{ und } f_2^{(4)} \approx 2 \cdot f_2^{(2)})$ oder $(f_1^{(4)} \approx 2 \cdot f_2^{(2)} \text{ und } f_2^{(4)} \approx 2 \cdot f_1^{(2)})$ |
| 60 | mindestens 1 Linie in $S^{(2)}$ |
| 61 | mehr als 1 Linie in $S^{(2)}$ |
| 62 | $(f_1^{(2)} \approx 2 \cdot f_1^{(1)} \text{ und } f_2^{(2)} \approx 2 \cdot f_2^{(1)})$ |

6

$$\text{oder } (f_1^{(2)} \approx 2 \cdot f_2^{(1)} \text{ und } f_2^{(2)} \approx 2 \cdot f_1^{(1)})$$

63    mindestens 1 Linie in $S^{(4)}$

64    mehr als 1 Linie in $S^{(4)}$

65    $(f_1^{(4)} \approx 4 \cdot f_1^{(1)} \text{ und } f_2^{(4)} \approx 4 \cdot f_2^{(1)})$

$$\text{oder } (f_1^{(4)} \approx 4 \cdot f_1^{(1)} \text{ und } f_2^{(4)} \approx 4 \cdot f_1^{(1)})$$

---

70    $(f_1^{(4)} \approx 4 \cdot f_1^{(1)}) \text{ oder } (f_1^{(4)} \approx 4 \cdot f_2^{(2)})$

---

80    $(f_1^{(2)} \approx 2 \cdot f_1^{(1)}) \text{ oder } (f_1^{(2)} \approx 2 \cdot f_2^{(1)})$

81    $|P(f_1^{(1)}) - P(f_2^{(1)})| \geq 10\text{dB}$

82    mindestens 1 Linie in $S^{(4)}$

83    $(f_1^{(4)} \approx 4 \cdot f_1^{(1)})$

---

90    mindestens 1 Linie in $S^{(4)}$

91    mehr als 1 Linie in $S^{(4)}$

92    $(f_1^{(4)} \approx 4 \cdot f_1^{(1)} \text{ und } f_2^{(4)} \approx 4 \cdot f_2^{(1)}) \text{ oder}$

$$(f_1^{(4)} \approx 4 \cdot f_2^{(1)} \text{ und } f_2^{(4)} \approx 4 \cdot f_1^{(1)})$$

---

100    $(f_1^{(4)} \approx 4 \cdot f_1^{(1)}) \text{ oder } (f_1^{(4)} \approx 4 \cdot f_2^{(1)})$

---

110    $(f_1^{(2)} \approx 2 \cdot f_1^{(1)} \text{ und}$

$$[f_2^{(2)} \approx 2f_1^{(1)} + (f_2^{(1)} - f_1^{(1)}) \text{ oder}$$
$$f_2^{(2)} \approx 2f_1^{(1)} - (f_2^{(1)} - f_1^{(1)})]$$

111    mindestens 1 Linie in $S^{(4)}$

112    $(f_1^{(4)} \approx 4 \cdot f_1^{(1)})$

---

120    $|P(f_1^{(1)}) - P(f_2^{(1)})| \geq 10\text{dB}$

Liste 2 der Ausgabeblöcke in den Figuren 2 und 3 und deren Bedeutung:

| Ausgabeblock | Bedeutung |
|---|---|
| 2ASK$_I$ | Amplituden-Shift-Keying |
| 2PSK$_I$ | Phase-Shift-Keying I |
| 4PSK$_I$ | Phase-Shift-Keying II |
| 2FSK$_I$ | Frequency-Shift-Keying |
| MSK$_I$ | Minimum-Shift-Keying |
| N | Noise (Rauschen; d.h. die Leistungsdichtespektren weisen keine Linien auf) |
| R | Rückweisung (d.h. trotz Detektion von Linien in den Leistungsspektren liegt keine der vorgenannten digitalen Modulationsarten 2ASK, 2PSK, 4PSK, 2FSK oder MSK vor) |

Der Index I mit I=1, 2, 3... gibt dabei die Tendenz der Erkennungssicherheit an. Je größer der Index ist, desto sicherer ist die getroffene Entscheidung. Mit z ist in den Figuren 2 und 3 jeweils die Verbindungsstelle im Flußdiagramm bezeichnet, an der der Diagrammteil der FIG. 3 an den Diagrammteil der FIG. 2 anzuschließen ist. Mit $\vec{M}$ ist der Merkmalsvektor des zu klassifizierenden Signals bezeichnet, der am Eingang des Klassifikators anliegt und der Angaben über beispielsweise Anzahl, Amplitude und Frequenzlage der detektierten Linien im Leistungsdichtespektrum des komplexen Nachrichtensignals bzw. der entsprechenden Zwischensignale enthält. Werden n Parameter (z.B. n=3: Anzahl, Amplitude und Frequenzlage der Linien) erfaßt, wird der Merkmalsvektor $\vec{M}$ zweckmäßigerweise in n Subvektoren $\vec{M}_1$, $\vec{M}_2$,...$\vec{M}_n$ aufgeteilt, die Informationen jeweils nur zu einem der n Parameter enthalten und die zu einer Merkmalsmatrix zusammengefaßt werden können. Im folgenden soll daher unter der Bezeichnung Merkmalsvektor $\vec{M}$ auch immer die Merkmalsmatrix verstanden werden, wo dies zutrifft. Mit $S^{(i)}$ (i=1, 2 und 4) sind die Leistungsdichtespektren des komplexen Nachrichtensignals r (i=1) sowie der durch nichtlineare Transformationen erzeugten Zwischensignale $r^2$ bzw. $r^4$ (i=2 bzw. i=4) bezeichnet. Mit $f_j^{(i)}$ (i=1, 2, 4; j=1, 2) ist die Frequenz der j-ten Linie im Leistungsdichtespektrum $S^{(i)}$ (i=1, 2, 4) bezeichnet und mit $P(f_j^{(i)})$ der Pegel bzw. Amplitude dieser Linie; dabei gibt j die Ordnung der Linie gemäß ihrem Pegel im betrachteten Spektrum wieder (z.B. entspricht j=1 einer Linie mit größtem Pegel).

Die in der Liste 1 angeführten Pegeldifferenzen mit $|P(f_j^{(i)})-P(f_k^{(i)})|$ i=1, 2, 4; j=1, 2; k=2, 1, dienen nur als grober Anhaltspunkt zur Abtrennung von 2ASK und 2FSK bzw. von MSK und 2PSK.

In einer vorteilhaften Weiterbildung des erfindungsgemäßen Verfahrens werden zusätzlich zu den robust, d.h. mit relativ konstantem Pegel auftretenden (und in der Tabelle von FIG. 1 mit "xx" bezeichneten) Linien in den einzelnen Leistungsdichtespektren die stark von der Art der verwendeten Tastung abhängigen (und in der Tabelle von FIG. 1 mit "x" bezeichneten), d.h. weniger robusten Linien ausgewertet, um neben der zu klassifizierenden Modulationsart und gegebenenfalls deren Trägerfrequenz $f_c$ unter Umständen auch deren Symbolfrequenz $f_s$ bestimmen zu können.

Hierzu wird in den einzelnen Spektren geprüft, ob bei zwei oder mehr als zwei detektierten Linien pro Spektrum die Linienabstände gleich oder annähernd gleich sind (unter Beachtung der sich durch die Modulo-$N_{FFT}$-Berechnung ergebenden Periodizität der Linien bzw. Liniengruppen in den einzelnen Leistungsdichtespektren $S^{(i)}$ sowie der Periodizität der Spektren selbst aufgrund der Abtastung mit der Frequenz $f_A$ (=Periode der Spektren)). Im einzelnen wird hierbei geprüft, ob die einzelnen Linienabstände innerhalb einer Periode eines Spektrums im einem ganzzahligen Verhältnis zueinander stehen. Bei 2ASK, 2PSK und 4PSK wird der kleinste Linienabstand als Schätzwert für die Symbolfrequenz $f_s$ ausgegeben. Ist diese Bedingung unter Berücksichtigung der zulässigen Toleranzen und der Modulo-$N_{FFT}$-Berechnung nicht erfüllt, so wird das Signal zurückgewiesen.

Da bei 2FSK und MSK jeweils mindestens 2 Linien zur Erkennung notwendig sind, und deren Abstand über den Frequenzhub $\Delta f$ bei 2FSK bzw. die Symbolfrequenz $f_s$ bei MSK festgelegt ist, kann bei diesen Modulationsarten immer ein Schätzwert für die Symbolfrequenz $f_s$ bzw. für den Modulationsindex $\eta$ angegeben werden. Werden in einem Spektrum nur zwei Linien detektiert, wird - unter Berücksichtigung dieser Periodizität - der kleinere der beiden ermittelten Linienabstände als Schätzwert für die Symbolfrequenz $f_s$ (bzw. für den Frequenzhub $\Delta f$ bei 2FSK) ausgegeben.

Als Toleranzfeld bei der Auswertung der Linienabstände wird vorteilhaft das Doppelte der durch die Form und Länge des benutzten Datenfensters bedingten spektralen Auflösung des Spektralschätzverfahrens eingesetzt. Bei einer auf einer Fast-Fouriertransformation (FFT) beruhenden Schätzung und Anwendung eines Blackman-Datenfensters entspricht das bei 60 dB Dämpfung der Hauptlinienkeule einer Toleranzbreite von 2 x 6 Bins.

In FIG. 4 ist eine bevorzugte Ausführungsform der erfindungsgemäßen Anwendung zum Ausführen des erfindungsgemäßen Verfahrens gezeigt. Ein digitaler Empfänger 2 ist eingangsseitig mit einer Antenne 1 verbunden. Am Ausgang des Empfängers 2 werden der Realteil n(t) und der Imaginärteil q(t) des aus dem Empfangssignal e(t) abgeleiteten komplexen Nachrichtensignals r(t) ausgegeben. Über eine Schaltvorrichtung 3 wird das Nachrichtensignal r(t) nacheinander entweder direkt über eine als linearer Transformator wirkende Verbindungsleitung 4 oder über die nichtlinearen Transformatoren 5a ($r^2$) bzw. 5b ($r^4$) auf den Eingang eines (digitalen) Fouriertransformators 6 gegeben, der eine diskrete Fouriertransformation des Nachrichtensignals r bzw. der transformierten Zwischensignale $r^2$ und $r^4$ (beispielhaft) mittels eines Fast-Fouriertransformationsverfahrens durchführt. Aus den so geschätzten Fourier-Spektren $Y(i \cdot f_A/N_{FFT})$ mit $0 \leq i \leq N_{FFT}$ werden in einer nachgeschalteten Einheit 7 die Leistungsdichtespektren $|Y|^2$ geschätzt; $f_A$ ist dabei die Abtastfrequenz und $N_{FFT}$ die Anzahl der Abtastwerte, die bei der Fast-Fouriertransformation jeweils als Block verarbeitet werden; ferner sind die Verbindungsleitungen zwischen digitalem Empfänger 2, Umschalter 3, Transformatoren 4, 5a und 5b, Fouriertransformator 6 und der Einheit 7 zur Schätzung der Leistungsdichtespektren jeweils mit zwei Schrägstrichen versehen, um damit anzudeuten, daß sie wegen des komplexen Charakters der auf ihnen übertragenen Signale jeweils zweifach ausgeführt sind. Die Leistungsdichtespektren werden anschließend in einer nachgeschalteten Einheit 8 durch Division durch $N_{FFT}$ normiert. Die einzelnen (normierten) Leistungsdichtespektren $S^{(i)}$ (i=1, 2, 4) des Nachrichtensignals r (i=1) bzw. der durch nichtlineare Transformationen erzeugten Zwischensignale $r^2$ (i=2) und $r^4$ (i=4) bilden jeweils ein Periodogramm und werden anschließend an einen Liniendetektor 9 weiter gegeben, der diese Spektren $S^{(i)}$ untersucht und Anzahl, Amplitude (Pegel) und Frequenzlage der detektierten Linien als Merkmalvektoren $\vec{M}$ an einen Klassifikator 10 gibt, der beispielsweise nach dem Klassifikationsschema gemäß FIG. 2 und 3 die Linien auswertet und das entsprechende Empfangssignal nach der Art seiner (digitalen) Modulation klassifiziert, indem ein entsprechendes Klassifikations-Ausgangssignal St z.B. an einen (nicht gezeigten) Demodulator gegeben wird, der entsprechend der festgestellten und durch das Klassifikations-Ausgangssignal St übermittelten Modulationsart die Demodulation des digital modulierten Signals durchführt. Die Leistungsdichtespektren werden parallel hierzu an einen Filter 11 gegeben, der beispielsweise als Medianfilter ausgebildet sein kann. In dem Filter wird der kontinuierliche Spektralanteil $S_c^{(i)}$ (f) des Leistungsdichtespektrums $S^{(i)}$ (i=1, 2, 4) geschätzt und dem Liniendetektor 9 zugeführt als Referenz zur Bildung einer adaptiven Detektionsschwelle $\lambda$(f) zur Einstellung einer konstanten Falschalarmrate für Spektralwerte im gesamten Frequenzbereich. Ferner wird eine vorgegebene Falschalarmrate $P_F$ einer Einheit 12 zugeführt, in der anhand von $P_F$ eine Schwelle k ermittelt wird, die ebenfalls als Steuergröße dem Liniendetektor 9 zugeführt wird und die zusammen mit dem geschätzten kontinuierlichen Spektralanteil $S_c^{(i)}$ zur Bildung der frequenzabhängigen adaptiven Detektionsschwelle $\lambda$(f) im Liniendetektor 9 verwendet wird.

Zur Funktion der Anordnung ist folgendes im einzelnen anzumerken:

1. Die nichtlinearen Transformatoren 5a, 5b übernehmen das auf die Zwischenfrequenz $f_z \approx 0$ abgemischte und abgetastete komplexe Nachrichtensignal $r(iT_a)$ mit seinem Realteil $n(iT_a)$ und Imaginärteil $q(iT_a)$,

$$r(iT_a) = n(iT_a) + jq(iT_a) \tag{1}$$

wobei $1/Ta = f_A$ die Abtastfrequenz ist.

Die verbleibende Restträgerfrequenz $f_c = f_z$ ist zunächst unbekannt und wird im Laufe des Verfahrens geschätzt. Das zu untersuchende Empfangssignal ist dabei zweckmäßigerweise bereits soweit aufbereitet, daß sich nur ein Modulationssignal im interessierenden Frequenzbereich befindet und die Abtastfrequenz $f_A$ der Breite des zu klassifizierenden, segmentierten Modulationssignals angepaßt ist, d.h. es fehlen keine wesentlichen Nutzsignalanteile und das Signal ist nicht sehr stark überabgetastet.

Durch die Schaltvorrichtung 3 am Eingang wird das so zur Verfügung gestellte komplexe Nachrichtensignal r(t) nacheinander den möglichen Transformationen r, $r^2$ und $r^4$ unterworfen (Die so gewonnenen Zwischensignale r, $r^2$ und $r^4$ können selbstverständlich auch parallel erzeugt und verarbeitet werden.).

2. Der Spektralschätzer 6 bis 8 schätzt von den erzeugten Zwischensignalen r, $r^2$ und $r^4$ die Leistungsdichtespektren $S^{(i)}$ (i=1, 2, 4).

3. Der Liniendetektor 9 untersucht die geschätzten Leistungsdichtespektren $S^{(i)}$ (i=1, 2, 4) auf die Existenz von Linien und stellt deren Anzahl, Frequenzlage und Amplitude (Pegel) fest.

4. Der Klassifikator 10 nimmt - wie z.B. in FIG. 2 und 3 dargestellt - entsprechend den vom Liniendetektor 9 ausgegebenen Merkmalvektoren $\vec{M}$, jeweils bestehend aus Linienanzahl, -position und -pegel, die Zuordnung der Signale zu den einzelnen Modulationsarten vor oder weist das Signal als nicht klassifizierbar zurück.

Damit die Leistungsfähigkeit des angegebenen Klassifikators 10 auf analytischem Weg angegeben werden kann, ist es zweckmäßig, daß die im hier beschriebenen Verfahren verwendete Spektralschätzung nach dem an sich bekannten Verfahren der Periodogramm-Analyse (vgl. z.B.: A. Papoulis: "Signal Analysis"; McGraw-Hill, New York, 1977) durchgeführt wird. Dieses Spektralschätzverfahren bietet gegenüber den parametrischen (modellgestützten) Spektralschätzverfahren den Vorteil der Robustheit gegenüber unbekannten Einflüssen wie z.B. farbigem Rauschen mit unbekannter Autokorrelationsfunktion als kontinuierlicher Spektralanteil. Weiterhin ist es möglich, unter Zuhilfenahme des zentralen Grenzwertsatzes unter einigen relativ allgemeinen Annahmen die bedingten Wahrscheinlichkeitsverteilungsdichten für Periodogrammstellen mit Linienanteilen und solchen mit kontinuierlichem Spektralanteil $S_c^{(i)}$ (f) anzugeben.

Mit diesen Angaben ist es möglich, aus der Kenntnis der Leistung einer zu detektierenden Linie ($P_L$) und der Leistungsdichte an der Stelle des Auftretens der Linie ($S_c^{(i)}$ (f)) die Detektionsparameter $P_{D,s}$ und $P_{F,s}$ für eine Periodogrammstelle anzugeben, wobei $P_{D,s}$ für die Entdeckungswahrscheinlichkeit für eine Linie steht und $P_{F,s}$ für die Einzelfalschalarmwahrscheinlichkeit für eine Periodogrammstelle mit ausschließlich konstantem Inhalt:

$$P_{F,s} = e^{-\frac{\lambda}{S_c^{(i)}}} \text{(f)} \tag{2}$$

$$P_D = Q(\sqrt{2N_{FFT}P_L/S_c^{(i)}\text{(f)}}, \sqrt{2\lambda/S_c^{(i)}\text{(f)}}) \tag{3}$$

mit Q(x, y): Marcum's Q-Function (siehe z.B. A. D. Whalen: "Detection of Signals in Noise"; Academic Press, New York, 1977). Wählt man die Detektionsschwelle $\lambda$ frequenzabhängig als Funktion des kontinuierlichen Spektralanteils $S_c^{(i)}$ (f) zu:

$$\lambda\ (f) = S_c^{(i)}\ (f)\cdot(1 + k), \tag{4}$$

so wird die Gesamtfalschalarmrate $P_F$ unabhängig von $S_c^{(i)}$ (f) und errechnet sich zu:

$$P_F = 1 - (1\ P_{F,s})^N FFT = 1 - (1 - e^{-(1 + k)})^N FFT \tag{5}$$

$$P_D\ =\ \prod_{i=1}^{q}\ P_{D,s}^{(i)} \tag{6}$$

mit $\lambda$(f) gleich der adapitiven (frequenzabhängigen) Detektionsschwelle und $S_c^{(i)}$ (f) gleich dem Anteil des kontinuierlichen Spektrums an der Stelle von f, der verursacht wird durch die stochastische Natur des Modulationssignals sowie durch additives Rauschen auf dem Übertragungsweg; k ist ein vorgebbarer konstanter Faktor, der, nachdem $S_c^{(i)}$ (f) einmal festgelegt worden ist, die Höhe der adaptiven (und durch $S_c^{(i)}$ (f) frequenzabhängigen) Detektionsschwelle $\lambda$(f) festgelegt; q ist gleich der Anzahl der Linien für die entsprechende Modulation (z.B. müssen bei MSK oder FSK mindestens zwei Linien detektiert werden und bei 2ASK, 2PSK oder 4PSK nur eine). Mit $P_F$ ist die Gesamtfalschalarmrate und mit $P_D$ die Gesamtentdeckungswahrscheinlichkeit bezeichnet.

Die für die Auswertung der obigen Gleichungen benötigten Linienleistungen und kontinuierlichen Spektraldichten können beispielhaft für den Fall weich getasteter Nachrichtensignale anhand eines Modells, bestehend aus zeitverschobenen Einzelimpulsen berechnet werden. Unter der (realistischen) Näherung einer gaussförmigen Einzelimpulsform können Gleichungen abgeleitet werden, welche die Klassifikationsleistung ($P_D$ und $P_F$) als Funktion des Signalzu-Rausch-Verhältnisses S/N und der Modulationsparameter angeben. Mit diesem relativ allgemeingültigen Modell und dem beschriebenen robusten Detektor ist es möglich, daß die so berechneten Klassifikationsleistungen als Grundlage zur Einstellung des Modulationartenserkenners in einer realen Umgebung benutzt werden können.

Zur Detektion der erzeugten Linien sollte, wie aus Gleichung (2) erkennbar, eine frequenzabhängige, adaptive Detektionsschwelle $\lambda$(f) erzeugt werden. Zur Angabe dieser Schwelle muß der kontinuierliche Teil $S_c^{(i)}$ (f) des Leistungsdichtespektrums $S^{(i)}$ möglichst gut geschätzt werden. Vorteilhafterweise erfolgt diese Schätzung durch Anwendung einer Medianfilterung auf das Periodogramm. Diese Schätzung bleibt durch eventuell vorhandene Linien relativ unbeeinflußt. Andere, weniger rechenintensive Schätzungen, wie z.B. geometrische oder arithmetische Mittelung benachbart positionierter Periodogrammstellen des Periodogramms, sind ebenfalls möglich.

Gemäß Gleichung (5) wird im Liniendetektor 9 nach Eingabe der zulässigen Gesamtfalschalarmrate $P_F$ und nach Berechnung des Schätzwerts des kontinuierlichen Spektrums $S_c^{(i)}$ die Detektion der Linien durchgeführt. Die gefundenen Linien werden in drei Merkmalvektoren mit Anzahl, Position und Höhe der gefundenen Linien abgelegt und an den Klassifikator 10 weitergeleitet. Dieser nimmt die Klassifikation z.B. entsprechend der Tabelle nach FIG. 1 bzw. dem Flußdiagramm nach FIG. 2 und 3 vor und gibt die erkannte Modulationsart zusammen mit der geschätzten Trägerfrequenz $f_c$ und eventuell der Symbolfrequenz $f_s$ als Ausgangs- oder Steuersignal St aus.

Um eine einwandfreie Funktion des Klassifikators 10 zu gewährleisten muß sichergestellt werden, daß nur Signale der definierten Klassen 2ASK, 2PSK, 4PSK, MSK und 2FSK zum Klassifikator 10 gelangen, da jede Modulationsart, die bereits eine Linie im Leistungsdichtespektrum enthält, wie z.B. ein unmodulierter Träger oder ein analoges amplitudenmoduliertes Trägersignal, nach der Tabelle von FIG. 1 fälschlicherweise als 2ASK klassifiziert wird. Zur Bewältigung dieser Aufgabe können in einer vorteilhaften Weiterbildung der Erfindung die cyklostationären Eigenschaften des modulierenden Signals unabhängig vom Einfluß der unbekannten Trägerfrequenz durch Auswertung des folgendermaßen transformierten komplexen Nachrichtensignals ausgemessen werden:

$$|r(t)|^2 - E\{|r(t)|^2\} \tag{7}$$

mit $E\{|r(t)|^2\}$ gleich dem Erwartungswert von $|r(t)|^2$.

Die Linien in diesem Signal geben die nur bei digital modulierten Signalen vorhandenen cyklostationären Eigenschaften des modulierenden Signals an. Werden in dem beschriebenen Signal Linien gefunden, so handelt es sich um digitale Modulation (oder allenfalls analoge Modulation mit periodisch modulierenden Signal). Da die erzeugten Linien vom Typ "x" sind, müssen sie eventuell verstärkt werden. Die dazu bestehenden Möglichkeiten bestehen beispielsweise darin:

- das empfangene Signal nachzufiltern, um weiche Tastung mit entsprechenden Amplitudeneinbrüchen zu erzwingen und/oder
- das transformierte Signal

$$r(t)r(t + \tau)^* - E\{r(t)r(t + \tau)^*\}$$

zur Liniensuche zu benutzen, wobei $\tau$ gemäß der Beziehung $\tau \simeq T_s/2$ mit $T_s = 1/f_s$ aus der geschätzten Symbolfrequenz $f_s$ abgeleitet wird und $E\{r(t) \cdot r(t+\tau)^*\}$ der Erwartungswert von $r(t) \cdot r(t+\tau)^*$ ist.

Die Erfindung ist nicht auf die beschriebenen Ausführungsbeispiele beschränkt, sondern sinngemäß auf weitere anwendbar.

Beispielsweise ist es möglich, bei Verzicht auf eine analytische Beschreibung des Klassifikators die Liniendetektion durch eine Eigen- oder Singulärwertzerlegung einer geschätzten Autokorrelationsmatrix zu ersetzen. Abzählen der signifikanten Eigen- bzw. Singulärwerte erlaubt es dann auf die Anzahl der im Spektrum enthaltenen Linien zu schließen. Dabei wird die Tatsache ausgenutzt, das die dominanten Eigenwerte der Autokorrelationsmatrix den eventuell im Spektrum enthaltenen Linien entsprechen (vgl. hierzu: Theorem von Grenander und Szegö bzw. D.W. Tufts, R. Kumaresan: "Estimation of Frequencies of Multiple Sinusoids; Making Linear Prediction Perform Like Maximum Likelihood"; Proc. of the IEEE, vol. 70, No. 9, pp. 975-989, 1982). So ist es eventuell möglich, die Liniendetektion durch diese parametrische Spektralschätzung zu ersetzen mit dem Vorteil, daß weniger Abtastwerte benötigt werden, allerdings bei herabgesetzter Sensitivität gegenüber der unbekannten Verteilung des kontinuierlichen Spektrums und fehlender analytischer Beschreibung des Liniendetektors.

Ferner kann als zusätzliches Maß für die Sicherheit bzw. Güte der Klassifikation die Summe aller detektierten und ausgewerteten Linien, gewichtet mit ihrer Erkennungssicherheit, dienen.

## Patentansprüche

1. Verfahren zur automatischen Klassifikation digital modulierter Signale, bei welchem Verfahren ein aus dem digital modulierten Signal abgeleitetes und nach einer bestimmten, anfangs noch unbekannten digitalen Modulationsart moduliertes komplexes Nachrichtensignal in mehrere Zwischensignale transformiert wird, wobei das komplexe Nachrichtensignal und die mehreren Zwischensignale unabhängig voneinander weiter verarbeitet werden und dabei die Grundlage für die Bestimmung der Modulationsart in einem Klassifikator bilden, wobei die komplexe Einhüllende des komplexen Nachrichtensignals im Zustandsdiagramm in der komplexen Ebene nur eine beschränkte Anzahl von gleichwahrscheinlichen und voneinander unabhängigen Zuständen einnimmt, <u>dadurch gekennzeichnet,</u>

   - daß als Transformationen diejenigen Transformationen $(r, r^2, r^4, |r|^2)$ ausgewählt werden, die jeweils für mindestens eine der zu erkennenden Modulationsarten im Zustandsdiagramm die symmetrisch zum Ursprung der komplexen Ebene liegenden Zustände in eine geringere Anzahl von Zuständen überführen, die unsymmetrisch zum Ursprung liegen;

   - daß aus dem komplexen Nachrichtensignal (r) und/oder den Zwischensignalen $(r^2, r^4, |r|^2)$ die jeweils zugehörigen Leistungsdichtespektren $(S^{(i)}; i=1, 2, 4)$ geschätzt werden;

   - daß die einzelnen Leistungsdichtespektren $(S^{(i)}; i=1, 2, 4)$ auf die Existenz von Linien untersucht werden und deren Anzahl und/oder Frequenzlage und/oder Amplitude und/oder Leistung festgestellt und in Form eines Merkmalvektors $(\vec{M})$ an den Klassifikator weitergegeben werden;

   - daß der Klassifikator anhand der Merkmalvektoren $(\vec{M})$ die Modulationsart bestimmt.

2. Verfahren nach Anspruch 1, dadurch gekennzeichnet, daß die einzelnen Zwischensignale $(r, r^2, r^4, |r|^2)$ jeweils durch eine lineare oder nichtlineare Transformation aus dem komplexen Nachrichtensignal (r) erzeugt werden und daß vorzugsweise die Mehrzahl der Transformationen nichtlineare Transformationen ($r^2$, $r^4$, $|r|^2$) von vorzugsweise niederer Ordnung, vorzugsweise von erster, zweiter, dritter oder vierter Ordnung sind.

3. Verfahren nach einem der Ansprüche 1 oder 2, dadurch gekennzeichnet, daß die einzelnen Transformationen ($r$, $r^2$, $r^4$, $|r|^2$) zeitlich parallel und/oder vorzugsweise zeitlich hintereinander durchgeführt werden.

4. Verfahren nach einem der vorhergehenden Ansprüche, zur Klassifizierung insbesondere von 2ASK-, 2FSK-, MSK-, 2PSK- und 4PSK-modulierten Signalen, dadurch gekennzeichnet, daß als nichtlineare Transformtion(en) die Quadrierung ($r^2$) des komplexen Nachrichtensignals ($r$) und/oder die Erhebung des komplexen Nachrichtensignals ($r$) zur vierten Potenz ($r^4$) und/oder die Quadrierung des Betrags ($|r|^2$) des komplexen Nachrichtensignals ($r$) ausgewählt wird (werden).

5. Verfahren nach Anspruch 4, dadurch gekennzeichnet, daß die Klassifizierung von 2ASK-, MSK-, 2FSK-, 2PSK- und 4PSK-modulierten Signalen anhand von in ihrem Pegel von der Art der Tastung der Signale weitgehend unabhängigen Linien erster Art ($xx$) in den Leistungsdichtespektren ($S^{(i)}$; i=1, 2, 4) des komplexen Nachrichtensignales ($r$) und der Zwischensignale ($r^2$, $r^4$, $|r|^2$) durchgeführt wird.

6. Verfahren nach Anspruch 5, dadurch gekennzeichnet, daß die Linien erster Art ($xx$)

   - im Leistungsdichtespektrum ($S^{(1)}$) des komplexen Nachrichtensignals ($r$) für 2ASK-modulierte Signale in etwa oder genau bei der Trägerfrequenz ($f_c$) erscheinen;

   - im Leistungsdichtespektrum ($S^{(2)}$) des quadrierten ($r^2$) komplexen Nachrichtensignals ($r$) für 2ASK- und 2PSK-modulierte Signale in etwa oder genau bei der doppelten Trägerfrequenz ($2f_c$) und für MSK-modulierte Signale bei in etwa oder genau symmetrisch um die doppelte Trägerfrequenz ($2f_c$) in etwa oder genau im Abstand der halben Symbolfrequenz ($f_s$) von der doppelten Trägerfrequenz ($2f_c$) liegenden Frequenzen ($2f_c \pm \frac{1}{2} \cdot f_s$) erscheinen;

   - im Leistungsdichtespektrum ($S^{(4)}$) des zur vierten Potenz ($r^4$) erhobenen komplexen Nachrichtensignals ($r$) für 2ASK-, 2PSK- und 4PSK-modulierte Signale in etwa oder genau bei der vierfachen Trägerfrequenz ($4f_c$) und für MSK-modulierte Signale bei in etwa oder genau symmetrisch um die vierfache Trägerfrequenz ($4f_c$) in etwa oder genau im Abstand der Symbolfrequenz ($f_s$) von der vierfachen Trägerfrequenz ($4f_c$) liegenden Frequenzen ($4f_c \pm f_s$) erscheinen;

   - im Leistungsdichtespektrum ($S^{(2)}_{|r|}$) des quadrierten Betrags ($|r|^2$) des komplexen Nachrichtensignals ($r$) für 2ASK-, 2PSK-, 4PSK-, 2FSK- und MSK-modulierte Signale bei der Frequenz Null erscheinen.

7. Verfahren nach Anspruch 6, dadurch gekennzeichnet, daß anhand der Linien erster Art ($xx$) zusätzlich die Trägerfrequenz ($f_c$) des klassifizierten Signals geschätzt wird.

8. Verfahren nach einem der Ansprüche 5 bis 7, dadurch gekennzeichnet, daß zur Klassifizierung zusätzlich die hauptsächlich nur bei weicher Tastung des Signals in den Leistungsdichtespektren ($S^{(i)}$; i=1, 2, 4) des komplexen Nachrichtensignals ($r$) und der Zwischensignale ($r^2$, $r^4$, $|r|^2$) auftretenden Linien zweiter Art ($x$) herangezogen werden.

9. Verfahren nach Anspruch 8, dadurch gekennzeichnet, daß die Linien zweiter Art ($x$)

   - im Leistungsdichtespektrum ($S^{(1)}$) des komplexen Nachrichtensignals ($r$) für 2ASK-modulierte Signale bei in etwa oder genau symmetrisch um die Trägerfrequenz ($f_c$) in etwa oder genau im Abstand der n-fachen Symbolfrequenz ($f_s$) von der Trägerfrequenz ($f_c$) liegenden Frequenzen ($f_c + n f_s$) erscheinen mit n = ±1, ±2..., vorzugsweise n = ±1;

   - im Leistungsdichtespektrum ($S^{(2)}$) des quadrierten ($r^2$) komplexen Nachrichtensignals ($r$) für 2ASK- und 2PSK-modulierte Signale bei in etwa oder genau symmetrisch um die zweifache Trägerfrequenz ($2f_c$) in etwa oder genau im Abstand von der n-fachen Symbolfrequenz ($f_s$) von der zweifachen Trägerfrequenz ($2f_c$) liegenden Frequenzen ($2f_c + n f_s$) erscheinen mit n = ±1, ±2,..., vorzugsweise n = ±1, sowie für MSK-modulierte Signale bei in etwa oder genau symmetrisch um die doppelte Trägerfrequenz ($2f_c$) in etwa oder genau im Abstand der ((2n+1)/2)-fachen Symbolfrequenz ($f_s$) von der doppelten Trägerfrequenz ($2f_c$) liegenden Frequenzen($2f_c +$

$((2n+1)/2) \cdot f_s)$ erscheinen mit n = ±2, ±3,..., vorzugsweise n = ±2;;

- im Leistungsdichtespektrum $(S^{(4)})$ des zur vierten Potenz $(r^4)$ erhobenen komplexen Nachrichtensignals (r) für 2ASK-, 2PSK- und 4PSK-modulierte Signale bei in etwa oder genau symmetrisch um die vierfache Trägerfrequenz $(4f_c)$ in etwa oder genau im Abstand der n-fachen Symbolfrequenz $(f_s)$ von der vierfachen Trägerfrequenz $(4f_c)$ liegenden Frequenzen$(4f_c+n \cdot f_s)$ erscheinen mit n = ±1, ±2;..., vorzugsweise n = ±1, sowie für MSK-modulierte Signale in etwa oder genau bei der vierfachen Trägerfrequenz $(4f_c)$ und/oder bei in etwa oder genau symmetrisch um die vierfache Trägerfrequenz $(4f_c)$ in etwa oder genau im Abstand der n-fachen Symbolfrequenz $(f_s)$ von der vierfachen Trägerfrequenz $(4f_c)$ liegenden Frequenzen $(4f_c+nf_s)$ erscheinen mit n = ±2, ±3,..., vorzugsweise n = ±2.

- im Leistungsspektrum $(S_{|r|}^{(2)})$ des quadrierten Betrags $(|r|^2)$ des komplexen Nachrichtensignals (r) für 2ASK-, 2PSK-, 4PSK-, 2FSK- und MSK-modulierte Signale bei Frequenzen $n \cdot f_s$ erscheinen mit n = ±1, ±2,..., vorzugsweise n = ±1.

10. Verfahren nach Anspruch 9, dadurch gekennzeichnet, daß anhand der Linien zweiter Art (x) zusätzlich die Symbolfrequenz $(f_s)$ des klassifizierten Nachrichtensignals geschätzt wird.

11. Verfahren nach Anspruch 10, dadurch gekennzeichnet, daß bei zwei oder mehr als zwei detektierten Linien in den einzelnen Leistungsdichtespektren geprüft wird, ob die einzelnen Linienabstände innerhalb einer Periode eines Spektrums in einem ganzzahligen oder zumindest annähernd ganzzahligen Verhältnis zueinanderstehen, daß bei 2ASK-, 2PSK- und 4PSK-modulierten Signalen der kleinste ermittelte Linienabstand - unter Berücksichtigung der sich durch die Modulo-$N_{FFT}$-Berechnung ergebenden Periodizität der detektierten Linien bzw. Liniengruppen und der sich infolge der Abtastung ergebenden Periodizität der Spektren selbst - als Schätzwert für die Symbolfrequenz $(f_s)$ gewählt wird und daß bei Nichterfüllung dieser Bedingung die Signale als unklassifizierbar zurückgewiesen werden.

12. Verfahren nach Anspruch 11, dadurch gekennzeichnet, daß bei nur zwei Linien in einem Leistungsdichtespektrum $(S^{(i)}; i=1,2,4)$ der kleinere der beiden daraus folgenden Linienabstände als Schätzwert für die Symbolfrequenz $(f_s)$ bzw. bei 2FSK-modulierten Signalen als Schätzwert für den Frequenzhub $(\Delta f)$ gewählt wird.

13. Verfahren nach einem der Ansprüche 11 oder 12, dadurch gekennzeichnet, daß als Toleranzfeld bei der Auswertung der Linienabstände in etwa oder genau das Doppelte der durch die Länge und Form des benutzten Datenfensters bedingten spektralen Auflösung des Verfahrens gewählt wird, die nach einer Fast-Fourier-Transformation zur Erzeugung des jeweiligen Leistungsdichtespektrums $(S^{(i)}; i=1,2,4)$ erzielt wird.

14. Verfahren nach einem der Ansprüche 4-13, dadurch gekennzeichnet, daß zur Klassifizierung von 2FSK-modulierten Signalen mit einem einseitigen Modulationsindex $\eta$ die 2FSK-modulierten Signale als Superposition von zwei gegensätzlich modulierten 2ASK-modulierten Signalen mit Trägerfrequenzen $(f_{c1}, f_{c2})$ in $2\eta$-fachem Abstand der Symbolfrequenz $(f_s)$ ( $f_{c1}=f_c+\eta f_s$ , $f_{c2}=f_c-\eta f_s$) aufgefaßt werden und daß zur Klassifizierung der 2FSK-modulierten Signale die beim i-fachen dieser Trägerfrequenzen $(f_{c1}, f_{c2})$ erscheinenden Linien dritter Art mit i = 1 im Leistungsdichtespektrum $(S^{(1)})$ des komplexen Nachrichtensignals (r), mit i = 2 im Leistungsdichtespektrum $(S^{(2)})$ des quadrierten $(r^2)$ komplexen Nachrichtensignals (r) und mit i = 4 im Leistungsdichtespektrum $(S^{(4)})$ des zur vierten Potenz $(r^4)$ erhobenen komplexen Nachrichtensignals (r) herangezogen werden.

15. Verfahren nach einem der vorhergehenden Ansprüche, dadurch gekennzeichnet, daß zusätzlich die Summe aller detektierten und ausgewerteten Linien der einzelnen Leistungsdichtespektren $(S^{(i)}; i=1,2,4)$, gewichtet mit ihrer geschätzten Erkennungssicherheit, als Maß für die Güte der durchgeführten Klassifikation verwendet wird.

16. Verfahren nach einem der vorhergehenden Ansprüche, dadurch gekennzeichnet, daß immer nur ein digital moduliertes Signal verarbeitet und klassifiziert wird und daß dieses Signal zuvor segmentiert wird.

17. Verfahren nach einem der vorhergehenden Ansprüche, dadurch gekennzeichnet, daß zur Schätzung der Leistungsdichtespektren $(S^{(i)}; i=1, 2, 4)$ des komplexen Nachrichtensignals (r) und der Zwischensignale $(r^2, r^4, |r|^2)$ die Diskrete Fourier-Transformation (DFT), vorzugsweise in Form des Fast-Fourier-Transformationsverfahrens (FFT) eingesetzt wird.

18. Verfahren nach Anspruch 17, dadurch gekennzeichnet, daß die Leistungsdichtespektren $(S^{(i)}; i=1, 2, 4)$ des komplexen Nachrichtensignals (r) und der Zwischensignale ($r^2$, $r^4$, $|r|^2$) jeweils in Form eines Periodogramms geschätzt werden, indem der Betrag des jeweiligen Fourierspektrums (Y) quadriert ($|Y|^2$) und vorzugsweise durch die Anzahl der Abtastwerte ($N_{FFT}$) der Fouriertransformation dividiert wird.

19. Verfahren nach Anspruch 18, dadurch gekennzeichnet, daß in den einzelnen Periodogrammen ($S^{(i)}$; i=1, 2, 4) jeweils die bedingten Wahrscheinlichkeitsverteilungsdichten für Periodogrammstellen mit Linienanteilen und Periodogrammstellen mit kontinuierlichem Spektralanteil $S_c^{(i)}$ (f) ; i=1, 2, 4) getrennt voneinander berechnet werden.

20. Verfahren nach Anspruch 19, dadurch gekennzeichnet, daß die Verteilungsdichte des kontinuierlichen Spektralanteils $S_c^{(i)}$ (f) ; i=1, 2, 4) mittels einer Medianfilterung oder durch geometrische oder arithmetische Mittelung benachbart positionierter Linien im Periodogramm ($S^{(i)}$; i=1, 2, 4) geschätzt wird.

21. Verfahren nach einem der Ansprüche 18-20, dadurch gekennzeichnet, daß in den einzelnen Periodogrammen ($S^{(i)}$, i=1, 2, 4) die mit ihrem Pegel eine vorgegebene Schwelle $\lambda$ jeweils überschreitenden Linien detektiert werden und daß als Schwelle $\lambda$ eine frequenzabhängige, vorzugsweise sich adaptiv einstellende Schwelle $\lambda$(f) gewählt wird.

22. Verfahren nach Anspruch 21, dadurch gekennzeichnet, daß die frequenzabhängige, vorzugsweise sich adaptiv einstellende Schwelle $\lambda$(f) in Abhängigkeit von einer vorgegebenen Falschalarmrate $P_F$ und/oder vom kontinuierlichen Spektralanteil $S_c^{(i)}$(f); i=1, 2 ,4) des jeweiligen Periodogramms ($S^{(i)}$; i=1, 2, 4) eingestellt wird.

23. Verfahren nach einem der Ansprüche 4-22, dadurch gekennzeichnet, daß zur Unterscheidung zwischen analog modulierten Signalen einerseits und 2ASK-, 2PSK-, 4PSK-, MSK- und 2FSK-modulierten Signalen andererseits das komplexe Nachrichtensignal (r) zusätzlich einer weiteren nichtlinearen Transformation der Form

$$|r(t)|^2 \text{-} E\{|r(t)|^2\}$$

unterzogen wird mit $E\{|r(t)|^2\}$ gleich dem Erwartungswert von $|r(t)|^2$ und daß das Auftreten von Linien in dem zugeordneten Leistungsdichtespektrum als weiteres Merkmal für das Vorliegen einer Modulation mit cyclostationärem modulierendem Signal genommen wird.

24. Verfahren nach Anspruch 23, dadurch gekennzeichnet, daß bei hart getasteten Signalen diese vor der Bildung der Leistungsdichtespektren durch eine Filterung in weich getastete Signale umgewandelt werden und/oder zusätzlich einer weiteren nichtlinearen Transformation der Form

$$r(t) \cdot r(t+\tau)^* \text{-} E\{r(t) \cdot r(t+\tau)^*\}$$

unterzogen wird mit $E\{r(t) \cdot r(t+\tau)^*\}$ gleich dem Erwartungswert von $r(t) \cdot r(t+\tau)^*$ und $\tau$ gleich oder annähernd gleich der vorzugsweise aus der geschätzten Bandbreite des komplexen Nachrichtensignals (r) abgeleiteten Symboldauer ($T_S$=1/$f_S$).

25. Anordnung zum Ausführen des Verfahrens nach einem der vorhergehenden Ansprüche, mit einem digitalen Empfänger (2), mehreren dem Empfänger (2) nachgeschalteten Transformatoren (4, 5a, 5b) für das komplexe Nachrichtensignal (r) sowie einem Klassifikator (10), dadurch gekennzeichnet, daß die Transformatoren (4, 5a, 5b) und/oder der digitale Empfänger (2) ausgangsseitig über eine Einheit (6-8) zur Schätzung von Leistungsdichtespektren ($S^{(i)}$; i=1, 2, 4) und einen Liniendetektor (9) zur Detektion von Linien in den Leistungsspektren ($S^{(i)}$; i=1, 2, 4) mit dem Klassifikator (10) verbunden sind.

26. Anordnung nach Anspruch 25, dadurch gekennzeichnet, daß die Transformatoren (4, 5a, 5b) entweder parallel oder über eine Umschaltvorrichtung (3) einzeln schaltbar zwischen dem digitalen Empfänger (2) und der Einheit (6-8) zur Schätzung von Leistungsdichtespektren ($S^{(i)}$; i=1, 2, 4) angeordnet sind.

27. Anordnung nach einem der Ansprüche 25 oder 26, dadurch gekennzeichnet, daß als Transformatoren ein linearer Transformator in Form einer einfachen Verbindungsleitung (4), ein Quadrierer (5b) und/oder ein Potenzierer zur 4. Potenz (5a) vorgesehen sind und vorzugsweise ein (oder mehrere) weiterer(weitere) Transformator(en), der (die) das komplexe Nachrichtensignal (r) (jeweils) der Transformation $|r(t)|^2$-$E\{|r(t)|^2\}$ oder (bzw.) der Transforma-

tion r(t)·r(t+τ)*-E{r(t)·r(t+τ)*} unterzieht (unterziehen) mit E{|r(t)|$^2$} bzw. E{r(t)·r(t+τ)*} gleich den Erwartungswerten von |r(t)|$^2$ bzw. r(t)·r(t+τ)* oder (bzw.) der Transformation der Quadrierung (|r|$^2$) des Betrags des komplexen Nachrichtensignals (r).

**28.** Anordnung nach einem der Ansprüche 25-27, dadurch gekennzeichnet, daß die Einheit (6-8) zur Schätung von Leistungsdichtespektren ($S^{(i)}$; i=1, 2, 4) als Periodogramm-Spektralschätzer ausgebildet ist mit einem vorzugsweise nach dem Fast-Fourier-Transformationsverfahren (FFT) arbeitenden Diskreten-Fourier-Transformator (DFT) (6), einer Einheit (7) zur Bildung des Betragsquadrats (|Y|$^2$) des DFT- bzw. FFT-Ausgangssignals (Y) und vorzugsweise einer Einheit (8) zur Division des Betragsquadrats (|Y$^2$|) durch die Anzahl der Abtastwerte ($N_{FFT}$) der zugehörigen Fouriertransformation.

**29.** Anordnung nach einem der Ansprüche 25-28, dadurch gekennzeichnet, daß die Einheit (6-8) zur Schätzung von Leistungsdichtespektren ($S^{(i)}$; i=1, 2, 4) bzw. der Periodogramm-Spektralschätzer(6-8) ausgangsseitig zusätzlich mit einer Einheit (11) zur Schätzung des kontinuierlichen Spektralanteils ($S_c^{(i)}$ (f)) ; i=1, 2, 4) der einzelnen Leistungsdichtespektren ($S^{(i)}$; i=1, 2, 4) verbunden ist und diese Einheit (11) ausgangsseitig mit dem Steuereingang für die Detektionsschwelle λ(f) des Liniendetektors (9) verbunden ist.

**30.** Anordnung nach Anspruch 29, dadurch gekennzeichnet, daß die Einheit (11) zur Schätzung des kontinuierlichen Spektralanteils ($S_c^{(i)}$ (f)) ; i=1, 2, 4) das geometrische oder arithmetische Mittel benachbart positionierter Periodogrammstellen im Leistungsdichtespektrum ($S^{(i)}$; i=1, 2, 4) oder im Periodogramm bildet oder vorzugsweise als Medianfilter (11) ausgebildet ist.

**31.** Anordnung nach einem der Ansprüche 25-30, dadurch gekennzeichnet, daß eine Einheit (12) zur Umrechnung einer vorgegebenen Falschalarmrate ($P_F$) in einen Schwellenwert (k) vorgesehen ist und daß diese Einheit (12) ausgangsseitig mit dem Steuereingang für die Detektionsschwelle λ(f) des Liniendetektors (9) verbunden ist.

## Claims

**1.** A method for the automatic classification of digitally modulated signals, in which method a complex communication signal which is derived from the digitally modulated signal and modulated by a certain initially unknown digital type of modulation is transformed into several intermediate signals, with the complex communication signal and the several intermediate signals being further processed independent from each other thereby forming the basis for the determination of the type of modulation in a classificator, with the complex envelope of the complex communication signal assuming only a limited number or equiprobabie states which are independent of each other in the complex plane of the state diagram,
<u>characterized in that</u>

- as transformations only those transformations (r, r$^2$, r$^4$, |r|$^2$) are selected which for at least one of the types of modulations that are to be detected transform the states which are arranged in the state diagram symmetrically to the origin of the complex plane into a smaller number of states which are arranged asymmetrically to said origin;
- from the complex communication signal (r) and/or the intermediate signals (r$^2$, r$^4$, |r|$^2$) the respective associate power density spectra ($S^{(i)}$ ; i=1, 2, 4) are estimated;
- the individual power density spectra ($S^{(i)}$ ; i1, 2, 4) are examined for the existence of lines, their number and/or frequency position and/or amplitude and/or power are determined and transmitted to the classificator in the form of a feature vector ($\vec{M}$);
- the classificator determines the type of modulation by means of the feature vectors ($\vec{M}$).

**2.** The method according to Claim 1, characterized in that each of the individual intermediate signals (r, r$^2$, r$^4$, |r|$^2$) is generated from the complex communication signal (r) by a linear or nonlinear transformation, and the majority of the transformations are preferably nonlinear transformations (r$^2$, r$^4$, |r|$^2$) of preferably low order, more preferably of the first, second, third or fourth order.

**3.** The method according to Claim 1 or 2, characterized in that the individual transformations (r, r$^2$, r$^4$, |r|$^2$) are carried out simultaneously and/or preferably in a time sequential manner.

**4.** The method according to one of the previous claims for the classification of, in particular 2ASK, 2FSK, MSK, 2PSK and 4PSK-modulated signals, characterized in that as nonlinear transformation(s) the squaring ($r^2$) of the complex communication signal and/or the raising of the complex communication signal (r) to the fourth power ($r^4$) and/or the squaring of the absolute value ($|r|^2$) of the complex communication signal (r) is (are) selected.

5. The method according to Claim 4, characterized in that the classification of 2ASK, MSK, 2FSK, 2PSK and 4PSK-modulated signals is carried out on the basis of lines of a first type (xx) their level being essentially independent of the type of of signal keying in the power density spectra ($S^{(i)}$; i=1, 2, 4) of the complex communication signal (r) and the intermediate signals ($r^2$, $r^4$, $|r|^2$).

6. The method according to Claim 5, characterized in that the lines of a first type (xx)

- appear approximately or exactly at the carrier frequency ($f_c$) in the power density spectrum ($S^{(1)}$) of the complex communications signal (r) for 2AKS-modulated signals;
- appear approximately or exactly at the twofold carrier frequency ($2f_c$) in the power density spectrum ($S^{(2)}$) of the squared ($r^2$) complex communication signal (r) for 2ASK and 2PSK-modulated signals, and for MSK-modulated signals, appear approximately or exactly symmetrical about the twofold carrier frequency ($2f_c$) at frequencies ($2f_c \pm \frac{1}{2}\cdot f_s$) which are located approximately or exactly the distance of half of the symbol frequency ($f_s$) from the twofold carrier frequency ($2f_c$);
- appear approximately or exactly at the fourfold carrier frequency ($4f_c$) in the power density spectrum ($S^{(4)}$) of the complex communication signal (r) raised to the fourth power ($r^4$) for 2ASK, 2PSK and 4PSK-modulated signals, and for MSK-modulated signals, appear approximately or exactly symmetrical about the fourfold carrier frequency ($4f_c$) at frequencies ($4f_c \pm f_s$) which are located approximately or exactly the distance of the symbol frequency ($f_s$) from the fourfold carrier frequency ($4f_c$);
- appear at the frequency zero in the power density spectrum ($S_{|r|}^{(2)}$) of the squared absolute value $|r|^2$ of the complex communication signal (r) for 2ASK, 2PSK, 4PSK, 2FSK and MSK-modulated signals.

7. The method according to Claim 6, characterized in that on the basis of the lines of a first type (xx) the carrier frequency ($f_c$) of the classified signal is additionally estimated.

8. The method according to one of Claims 5 through 7, characterized in that for the classification the lines of the second type (x) which mainly occur only upon soft signal keying in the power density spectra ($S^{(i)}$; i=1, 2, 4) of the complex communication signal (r) and the intermediate signals ($r^2$, $r^4$, $|r|^2$) are additionally used.

9. The method according to Claim 8, characterized in that the lines of a second type (x)

- appear approximately or exactly symmetrical about the carrier frequency ($f_c$) in the power density spectrum ($S^{(1)}$) of the complex communications signal (r) for 2AKS-modulated signals at frequencies ($f_c + nf_s$) with n = ±1, ±2, ..., preferably n = ± 1, which are located at approximately or exactly the distance of the n-fold symbol frequency ($f_s$) from the carrier frequency ($f_c$);
- appear approximately or exactly symmetrical about the twofold carrier frequency ($2f_c$) in the power density spectrum ($S^{(2)}$) of the squared ($r^2$) complex communication signal (r) for 2ASK and 2PSK-modulated signals at frequencies ($2f_c + nf_s$) with n = ±1, ±2 ..., preferably n = ± 1, which are located in approximately or exactly the distance of the n-fold symbol frequency ($f_s$) from the twofold carrier frequency ($2f_c$), and for MSK-modulated signals, appear approximately or exactly symmetrical about the twofold carrier frequency ($2f_c$) at frequencies ($2f_c + ((2n + 1)/2)\cdot f_s$) with n = ±2, ±3, ..., preferably n = ± 2, which are located approximately or exactly the distance of the ((2n + 1)/2)-fold symbol frequency ($f_s$) from the twofold carrier frequency ($2f_c$);
- appear approximately or exactly symmetrical about the fourfold carrier frequency ($4f_c$) in the power density spectrum ($S^{(4)}$) of the complex communication signal (r) raised to the fourth power ($r^4$) for 2ASK, 2PSK and 4PSK-modulated signals at frequencies ($4f_c + n\cdot f_s$), with n = ±1, ±2, ..., preferably n = ±1, which are located approximately or exactly the distance of the n-fold symbol frequency ($f_s$) from the fourfold carrier frequecy ($4f_c$), and for MSK-modulated signals, appear approximately or exactly at the fourfold carrier frequency ($4f_c$) and/or approximately or exactly symmetrical about the fourfold carrier frequency ($4f_c$) at frequencies ($4f_c + n\cdot f_s$), with n = ±2, ±3, ..., preferably n = ±2, which are located approximately or exactly the distance of the n-fold symbol frequency ($f_s$) from the fourfold carrier frequency (4fc);
- appear at the frequencies n·fs, with n = ±1, ±2 ..., preferably n = ±1, in the power density spectrum ($S_{|r|}^{(2)}$) of the squared absolute value $|r|^2$ of the complex communication signal (r) for 2ASK, 2PSK, 4PSK, 2FSK and MSK-modulated signals.

10. The method according to Claim 9, characterized in that on the basis of the lines of a second type (x) the carrier symbol ($f_s$) of the classified signal is additionally estimated.

11. The method according to Claim 10, characterized in that with two or more than two detected lines in the individual power density spectra it is checked whether the individual line distances within one period of a spectrum have an integer or at least approximately integer ratio to one another, and that for 2ASK, 2PSK and 4PSK-modulated signals the smallest determined line distance - under consideration of the periodicity resulting from the modulo $N_{FFT}$ calculation of the detected lines or line groups, respectively, and from the periodicity of the spectra themselves which results from sensing - is selected as an estimate for the symbol frequency ($f_s$), and that upon a failure to comply with this condition the signals are rejected as being unclassifiable.

12. The method according to Claim 11, characterized in that with only two lines in a power density spectrum ($S^{(i)}$ ; i=1, 2, 4) the smaller of the two line distances resulting therefrom is selected as an estimate for the symbol frequency ($f_s$) or for 2FSK-modulated signals, respectively, is selected as an estimate for the frequency deviation ($\Delta f$).

13. The method according to one of Claims 11 or 12, characterized in that as the tolerance field for the evaluation of the line distances approximately or exactly the twofold of the spectral resolution of the method caused by length and shape of the used data window is selected, which is obtained by means of a fast Fourier transformation for the generation of the respective power density spectrum ($S^{(i)}$ ; i=1, 2, 4).

14. The method according to one of Claims 4 through 13, characterized in that for the classification of 2FSK-modulated signals with a single-side modulation index η the 2FSK-modulated signals are interpreted as a superposition of two opposingly modulated 2ASK-modulated signals with carrier frequencies ($f_{c1}$, $f_{c2}$) at a 2η-fold distance from the symbol frequency ($f_s$) ($f_{c1} = f_c + \eta f_s$; $f_{c2} = f_c - \eta f_s$), and that for the classification of the 2FSK-modulated signals lines of a third type are used which appear at the i-fold of these carrier frequencies ($f_{c1}$, $f_{c2}$), with i = 1 in the power density spectrum ($S^{(1)}$) of the complex communication signal (r), with i = 2 in the power density spectrum ($S^{(2)}$) of the squared complex communication signal ($r^2$), and with i = 4 in the power density spectrum ($S^{(4)}$) of the communication signal ($r^4$) raised to the fourth power.

15. The method according to one of the previous claims, characterized in that the sum of all detected and evaluated lines of the individual power density spectra ($S^{(i)}$; i=1, 2, 4), weighted with their estimated detection reliability, is additionally used as a measure for the quality of the classification made.

16. The method according to one of the previous claims, characterized in that only one digitally modulated signal is processed and classified at a time and that said signal is segmented first.

17. The method according to one of the previous claims, characterized in that for the estimation of the power density spectra ($S^{(i)}$ ; i=1, 2, 4) of the complex communication signal (r) and the intermediate signals ($r^2$, $r^4$, $|r|^2$) the discrete Fourier transformation (DFT), preferably in the form of the fast Fourier transformation (FFT) method, is employed.

18. The method according to Claim 17, characterized in that each of the power density spectra ($S^{(i)}$ ; i=1, 2, 4) of the complex communication signal (r) and the intermediate signals ($r^2$, $r^4$, $|r|^2$) is estimated in the form of a periodogram in that the absolute value of the respective Fourier spectrum (Y) is squared ($|Y|^2$) and preferably divided by the number of sensed values ($N_{FFT}$) of the Fourier transformation.

19. The method according to Claim 18, characterized in that in each of the individual periodograms ($S^{(i)}$ ; I=1, 2, 4) the conditional probability distribution densities of periodogram positions with line portions and of periodogram positions with continuous spectral portion ($S_c^{(i)}$ (f) ; i=1, 2, 4) are calculated separate from each other.

20. The method according to Claim 19, characterized in that the probability distribution of the continuous spectral portion ($S_c^{(i)}$ (f) ; i=1, 2, 4) is estimated by means of a median filtering or by means of a geometric or arithmetic averaging of adjacently positioned lines in the periodogram ($S^{(i)}$ ; i=1, 2, 4).

21. The method according to one of Claims 18 through 20, characterized in that in the individual periodograms ($S^{(i)}$ ; i=1, 2, 4) lines are detected the level of which exceeds a predetermined threshold λ, and that as the threshold λ a frequency-dependent, preferably adaptively adjusting threshold λ(f) is selected.

22. The method according to Claim 21, characterized in that the frequency-dependent, preferably adaptively adjusting

threshold $\lambda(f)$ is set as a function of a given false alarm rate $P_F$ and/or the continuous spectral portion ($S_c^{(i)}$ (f) ; i=1, 2, 4) of the respective periodogram ($S^{(i)}$ ; i=1, 2, 4).

23. The method according to one of Claims 4 through 22, characterized in that for the distinction between analog modulated signals on the one hand and 2ASK, 2PSK, 4PSK, MSK and 2FSK-modulated signals on the other hand the complex communication signal (r) is additionally subjected to another, nonlinear transformation of the form

$$|r(t)|^2 - E\{|r(t)|^2\}$$

with $E\{|r(t)|^2\}$ equal to the expected value of $|r(t)|^2$, and that the occurrence of lines in the associated power density spectrum is taken as another characteristic for the existence of a modulation with a cyclostationary modulating signal.

24. The method according to Claim 23, characterized in that with hard keyed signals these are converted into soft keyed signals prior to the generation of the power density spectra by means of a filtering operation and/or are additionally subjected to another nonlinear transformation of the form

$$r(t) \cdot r(t + \tau)^* - E\{r(t) \cdot r(t + \tau)^*\}$$

with $E\{r(t) \cdot r(t + \tau)^*\}$ equal to the expected value of $r(t) \cdot r(t + \tau)^*$ and $\tau$ equal or approximately equal to the symbol time duration ($T_s = 1/f_s$) which is preferably derived from the estimated bandwidth of the complex communication signal (r).

25. An arrangement for carrying out the method according to one of the previous claims, comprising a digital receiver (2), several transformers (4, 5a, 5b) for the complex communication signal (r) which are connected downstream of the receiver (2), as well as a classificator (10), characterized in that the transformers (4, 5a, 5b) and/or the digital receiver (2) are connected on the output side with a classificator (10) via a unit (6-8) for estimating the power density spectra ($S^{(i)}$ ; i=1, 2, 4) and a line detector (9) for the detection of lines in the power density spectra ($S^{(i)}$ ; i=1, 2, 4).

26. The arrangement according to Claim 25, characterized in that the transformers (4, 5a, 5b) are arranged either in parallel or via a switchover device (3) so as to be individually controllable between the digital receiver (2) and the unit (6-8) for estimating the power density spectra ($S^{(i)}$ ; i=1, 2, 4).

27. The arrangement according to one of Claims 25 or 26, characterized in that as the transformers a linear transformer in the form of a simple connecting line (4), a squarer (5b) and/or an exponentiator for raising to the 4th power (5a) are provided, and preferably one (or several) further transformer(s) which subject(s) the complex communication signal (r) to the transformation $|r(t)|^2 - E\{|r(t)|^2\}$ or the transformation $r(t) \cdot r(t + \tau)^* - E\{r(t) \cdot r(t + \tau)^*\}$ (respectively), with $E\{|r(t)|^2\}$ or $E\{r(t) \cdot r(t + \tau)^*\}$, respectively, equal to the expected values of $|r(t)|^2$ or $r(t + \tau)^*$, respectively, or the transformation (respectively) of the square ($|r(t)|^2$) of the absolute value of the complex communication signal (r).

28. The arrangement according to one of Claims 25 through 27, characterized in that the unit (6-8) for estimating the power density spectra ($S^{(i)}$ ; i=1, 2, 4) is formed as a periodogram spectral estimator with a discrete Fourier transformer (DFT) (6) which preferably operates to the fast Fourier transformation (FFT) method, a unit (7) for calculating the squared absolute value ($|Y|^2$) of the DFT or the FFT output signal (Y), respectively, and preferably a unit (8) for dividing the squared absolute value ($|Y|^2$) by the number of sensed values ($N_{FFT}$) of the associated Fourier transformation.

29. The arrangement according to one of Claims 25 through 28, characterized in that the unit (6-8) for the estimation of power density spectra ($S^{(i)}$ ; i=1, 2, 4) or the periodogram spectral estimator (6-8), respectively, is additionally connected on the output side with a unit (11) for estimating the continuous spectral portion ($S_c^{(i)}$ (f) ; i=1, 2, 4) of the individual power density spectra ($S^{(i)}$ ; i=1, 2, 4) and said unit (11) is connected on the output side with the control input for the detection threshold $\lambda(f)$ of the line detector (9).

30. The arrangement according to Claim 29, characterized in that the unit (11) for estimating the continuous spectral portion ($S_c^{(i)}$ (f) ; i=1, 2, 4) calculates the geometric or arithmetic average of neighbouring periodogram positions in the power density spectrum ($S^{(i)}$ ; i=1, 2, 4) or in the periodogram, or is preferably formed as a median filter (11).

31. The arrangement according to one of Claims 25 through 30, characterized in that a unit (12) for converting a given false alarm rate ($P_F$) into a threshold value (k) is provided and that said unit (12) is connected at its output side with the control input for the detection threshold $\lambda(f)$ of the line detector (9).

**Revendications**

1. Procédé pour la classification automatique de signaux à modulation numérique. par lequel un signal de communication complexe dérivé du signal à modulation numérique et modulé selon un mode de modulation numérique encore inconnu initialement est transformé en plusieurs signaux intermédiaires, le signal de communication complexe et les plusieurs signaux intermédiaires étant traités ultérieurement indépendammentt l'un de l'autre et formant ainsi la base pour la détermination du mode de modulation dans un classificateur, l'enveloppe complexe du signal de communication complexe ne prenant dans le diagramme d'état dans le plan complexe qu'un nombre limité d'états équiprobables indépendants les uns des autres,
   **caractérisé en ce que**

   - comme transformations sont sélectionnées les transformations (r, $r^2$, $r^4$, $|r|^2$) qui transforment respectivement pour au moins un des modes de modulation reconnaisables dans le diagramme d'état, les états symétriques à l'origine du plan complexe, en un nombre plus petit d'états, asymétriques à l'origine;

   - les spectres de puissance volumique ($s^{(i)}$ ; i=1, 2, 4) respectivement associés sont estimés à partir du signal de communication complexe ( r ) et/ou des signaux intermédiaires ($r^2$, $r^4$, $|r|^2$);

   - les différents spectres de puissance volumique ($s^{(i)}$ ; i=1, 2, 4) sont examinés quant à l'existence de lignes et que leur nombre et/ou leur position en fréquence et/ou leur amplitude et/ou puissance sont constatés et transférés au classificateur sous forme d'un vecteur de caractéristiques ($\vec{M}$);

   - le classification détermine le mode de modulation à partir des vecteurs de caractéristiques ($\vec{M}$).

2. Prodédé selon la revendication 1, caractérisé en ce que les différents signaux intermédiaires (r, $r^2$, $r^4$, $|r|^2$) sont respectivement générés par une transformation linéaire ou non-linéaire à partir du signal de communication complexe (r) et que de préférence la plupart des transformations sont des transformations non-linéaires ($r^2$, $r^4$,$|r|^2$) de préférence d'ordre inférieur, de préférence de premier, deuxième, troisième ou quatrième ordre.

3. Procédé selon l'une des revendications 1 ou 2, caractérisé en ce que les différentes transformations ($r^2$, $r^4$, $|r|^2$) sont effectuées temporairement parallèles et/ou de préférence temporairement l'une après l'autre.

4. Procédé selon l'une des revendications précédentes pour la classification essentiellement de signaux modulés 2ASK, 2FSK, MSK, 2PSK et 4PSK, caractérisé en ce que l'élévation au carré ($r^2$) du signal de communication complexe (r) et/ou l'élévation du signal de communication complexe (r) à la quatrième potence ($r^4$) et/ou l'élévation au carré du montant ($|r|^2$) du signal de communication (r) est (sont) sélectionnée(s) comme transformation(s) non-linéaire(s).

5. Procédé selon la revendication 4, caractérisé en ce que la classifiaction de signaux modulés 2ASK, MSK, 2FSK, 2PSK est effectuée au moyen de lignes de premier ordre (xx), largement indépendantes en ce qui concerne leur niveau du mode de la manipulation des signaux, dans les spectres de puissance volumique ($S^{(i)}$ ; i=1, 2, 4) du signal de communication complexe (r) et des signaux intermédiaires ($r^2$, $r^4$, $|r|^2$).

6. Procédé selon la revendication 5, caractérisé en ce que les lignes de premier ordre (xx)

   - apparaissent dans le spectre de puissance volumique ($S^{(1)}$) du signal de communication complexe (r) pour des signaux modulés 2ASK à peu prés ou exactement à la fréquence porteuse ($f_c$);

   - apparaissent dans le spectre de puissance volumique ($S^{(2)}$) du signal de communication complexe (r) élevé au carré ($r^2$) pour des signaux modulés 2ASK et 2PSK à peu près ou exactement à la double fréquence porteuse ($2f_c$) et pour des signaux modulés MSK à peu près ou exactement symétriques autour de la double fréquence porteuse ($2f_c$) à peu près ou exactement aux fréquences ($2f_c \pm \frac{1}{2} \cdot f_s$) situées à peu près ou exactement à l'écart entre la demi-fréquence symbolique ($f_s$) et la double fréquence porteuse ($2f_c$);

-   apparaissent dans le spectre de puissance volumique ($S^{(4)}$) du signal de communication complexe ($r$) élevé à la quatrième potence ($r^4$) pour des signaux modulés 2ASK, 2PSK et 4PSK à peu près ou exactement à la quadruple fréquence porteuse ($4f_c$) et pour des signaux modulés MSK à peu près ou exactement symétriques autour de la quadruple fréquence porteuse ($4f_c$) à peu près ou exactement aux fréquences ($4f_c \pm f_s$) situées à l'écart entre la fréquence symbolique ($f_s$) et la quadruple fréquence porteuse ($4f_c$).

-   apparaissent dans le spectre de puissance volumique ($S_{|r|}^{(2)}$) de la valeur élevée au carré ($|r|^2$) du signal de communication complexe ($r$) pour les signaux modulés 2ASK, 2PSK, 4PSK, 2FSK et MSK à la fréquence zéro.

**7.** Procédé selon la revendication 6, caractérisé en ce que en sus la fréquence porteuse ($f_c$) du signal classifié peut être estimée au moyen de la ligne de premier ordre.

**8.** Procédé selon l'une des revendications 5 à 7, caractérisé en ce que pour la classification les lignes de deuxième ordre ($x$), apparaissant essentiellement et uniquement lors d'une manipulation douce du signal dans les spectres de puissance volumique ($S^{(i)}$ ; i=1, 2, 4) du signal de communication complexe ($r$) et des signaux intermédiaires ($r^2$, $r^4$, $|r|^2$), les lignes de deuxième ordre ($x$) sont en sus utilisées.

**9.** Procédé selon la revendication 8, caractérisé en ce que les lignes de deuxième ordre ($x$)

-   apparaissent avec $n = \pm 1, \pm 2 \ldots$, de préférence $n = \pm 1$, dans le spectre de puissance volumique ($S^{(1)}$) du signal de communication complexe ($r$) pour des signaux modulés 2ASK à des fréquences ($f_c + nf_s$) situés à peu près ou exactement symétriquement autour de la fréquence porteuse ($f_c$) à peu près ou exactement à l'écart entre la multiple fréquence symbolique ($f_s$) et la fréquence porteuse ($f_c$);

-   apparaissent avec $n = \pm 1, \pm 2 \ldots$, de préférence $n = \pm 1$, dans le spectre de puissance volumique ($S^{(2)}$) du signal de communication complexe ($r$) élevé au carré ($r^2$) pour des signaux modulés 2ASK et 2PSK à des fréquences ($2f_c + nf_s$) situées à peu près ou exactement symétriquement autour de la double fréquence porteuse ($2f_c$) à peu prés ou exactement à l'écart entre la multiple fréquence symbolique ($f_s$) et la double fréquence porteuse ($2f_c$), ainsi que pour les signaux modulés MSK à des fréquences ($2f_c + ((2n + 1)/2) \cdot f_s$) avec $n = \pm 2, \pm 3 \ldots$, de préférence $n = \pm 2$, situées à peu près ou exactement symétriquement autour de la double fréquence porteuse ($2f_c$) à peu près ou exactement à l'écart entre la fréquence symbolique ($(2n + 1)/2$) fois ($f_s$) et la double fréquence porteuse ($2f_c$);

-   apparaissent avec $n = \pm 1, \pm 2, \ldots$, de préférence $n = \pm 1$, dans le spectre de puissance volumique ($S^{(4)}$) du signal de communication complexe ($r$) élevé à la quatrième puissance ($r^4$) pour les signaux modulés 2ASK, 2PSK et 4PSK à des fréquences ($4f_c + n \cdot f_s$) situées à peu près ou exactement symétriquement autour de la quadruple fréquence porteuse ($4f_c$) à peu près ou exactement à l'écart entre la multiple fréquence symbolique ($f_s$) et la quadruple fréquence porteuse ($4f_c$), ainsi que pour des signaux modulés MSK à des fréquences ($4f_c + nf_s$) situées à peu près ou exactement à la quadruple fréquence porteuse ($4f_c$) et/ou à peu près ou exactement symétriquement autour de la quadruple fréquence porteuse ($4f_c$) à peu près ou exactement à l'écart entre la multiple fréquence symbolique ($f_s$) et la quadruple fréquence porteuse ($4f_c$);

-   apparaissent avec $n = \pm 1, \pm 2 \ldots$, de préférence $n = \pm 1$, dans le spectre de puissance volumique ($S_{(r)}^{(2)}$) de la valeur élevée au carré ($|r|^2$) du signal de communication complexe ($r$) pour des signaux modulés 2ASK, 2PSK, 4PSK, 2FSK et MSK à des fréquences $n \cdot f_s$.

**10.** Procédé selon la revendication 9, caractérisé en ce que la fréquence symbolique ($f_s$) du signal de communication classifié est en sus estimée au moyen des lignes du deuxième ordre ($x$).

**11.** Procédé selon la revendication 10, caractérisé en ce que sur deux ou plus que deux lignes détectées dans les différents spectres de puissance volumique on contrôle si les différents écarts entre les lignes d'une période d'un spectre se situent mutuellement dans un rapport entier ou au moins approximativement entier, qu'avec des signaux modulés 2ASK, 2PSK et 4PSK, l'écart minimal entre lignes - en tenant compte de la périodicité des lignes ou groupes de lignes détectés résultant du calcul modulo - $N_{FFT}$ et de la périodicité des spectres eux-mêmes résultant du balayage - est choisi comme valeur estimative pour la fréquence symbolique ($f_s$) et que, si cette condition n'est pas satisfaite, les signaux sont rejetés comme non classifiables.

**12.** Procédé selon la revendication 11, caractérisé en ce que avec uniquement deux lignes dans un spectre de puissance volumique ($S^{(i)}$ ; i=1, 2, 4) l'écart entre lignes le plus petit en résultant est choisi comme valeur estimative pour la fréquence symbolique ($f_s$) ou avec des signaux modulés 2FSK comme valeur estimative pour l'excursion de fréquence ($\Delta f$).

**13.** Procédé selon l'une des revendications 11 ou 12, caractérisé en ce que comme zone de tolérance on choisi pour l'évaluation des écarts entre lignes à peu près ou exactement le double de la résolution spectrale du procédé conditionnée par la longueur et la forme de la fenêtre de données, obtenue après une transformation Fast-Fourier pour la génération du spectre de puissance volumique ($S^{(i)}$ ; i=1, 2, 4 respectif.

**14.** Procédé selon l'une des revendications 4 - 13, caractérisé en ce que pour la classification de signaux modulés 2FSK avec un index de modulation asymétrique $\eta$, les signaux modulés 2FSK sont compris comme superposition de deux signaux modulés 2ASK à modulation opposée avec des fréquences porteuses ($f_{c1}$, $f_{c2}$) à un écart $2\eta$ fois de la fréquence symbolique ($f_s$) ($f_{c1} = f_c + \eta f_s$, $f_{c2} = f_c - \eta f_s$) et que, pour la classification des signaux modulés 2FSK on recourt aux lignes de troisième ordre apparaissant à i fois de ces fréquences porteuses ($f_{c1}$, $f_{c2}$) avec i=1 dans le spectre de puissance volumique ($S^{(1)}$) du signal de communication complexe (r) avec i=2 dans le spectre de puissance volumique ($S^{(2)}$) du signal de communication complexe (r) élevé au carré ($r^2$) et avec i=4 dans le spectre de la puissance volumique ($S^{(4)}$) du signal de communication complexe (r) élevé à la quatrième puissance ($r^4$).

**15.** Procédé selon l'une des revendications précédentes, caractérisé en ce que la somme de toutes les lignes détectées et évaluées des différents spectres de puissance volumique ($S^{(1)}$ ; i=1, 2, 4), pondérées de leur sécurité de reconnaissance estimée, est en sus utilisée comme cote pour la qualité de la classification effectuée.

**16.** Procédé selon l'une des revendications précédentes, caractérisé en ce que uniquement un signal modulé numérique est traité et classifié et que ce signal est segmenté au préalable.

**17.** Procédé selon l'une des revendications précédentes, caractérisé en ce que pour l'estimation des spectres de puissance volumique ($S^{(1)}$ ; i=1, 2, 4) du signal de communication complexe (r) et des signaux intermédiaires ($r^2$, $r^4$, $|r|^2$) on utilise la transformation discrète Fourier (DFT), de préférence sous forme du procédé de transformation Fast-Fournier (FFT).

**18.** Procédé selon la revendication 17, caractérisé en ce que les spectres de puissance volumique ($S^{(i)}$ ; i=1, 2, 4) du signal de communication complexe (r) et des signaux intermédiaires ($r^2$, $r^4$, $|r|^2$) sont respectivement estimés sous forme d'un périodogramme, en ce que la valeur du spectre Fourier respectif ($|Y|^2$) et de préférence divisée par le nombre des valeurs explorées ($N_{FFT}$) de la transformation Fourier.

**19.** Procédé selon la revendication 18, caractérisé en ce que dans les différents périodogrammes ($S^{(i)}$ ; i=1, 2, 4) les densités de répartition de probabilité conditionnelles sont respectivement calculées séparément l'une de l'autre pour des positions du périodogramme avec des portions linéaires et des positions du périodogramme avec une portion spectrale continue ($S_c^{(i)}$ (f) ; i=1, 2, 4).

**20.** Procédé selon la revendication 19, caractérisé en ce que la densité de répartition de la portion spectrale continue ($S_c^{(i)}$ (f); i=1, 2, 4) est estimé au moyen d'un filtrage médian ou calcul de la moyenne géométrique ou arithmétique de lignes adjacentes positionnées dans le périodogramme ($S^{(i)}$, i=1, 2, 4).

**21.** Procédé selon l'une des revendications 18 - 20, caractérisé en ce que des lignes dépassant respectivement avec leur niveau un seuil $\lambda$ sont détectées dans les différents périodogrammes ($S^{(i)}$, i=1, 2, 4) et qu'un seuil $\lambda$ (f) sélectif, de préférence à autoréglage adaptatif, est choisi comme seuil $\lambda$,

**22.** Procédé selon la revendication 21, caractérisé en ce que le seuil sélectif $\lambda$ (f), de préférence à autoréglage adaptatif, est réglé de préférence en dépendance d'un taux d'alarme incorrect $P_F$ donné et/ou par la portion spectrale continue ($S_c^{(i)}$ (f) ; i=1, 2, 4) du périodogramme respectif ($S^{(i)}$; i=1, 2, 4).

**23.** Procédé selon l'une des revendications 4 - 22, caractérisé en ce que pour différencier entre les signaux modulés analogiques d'une part et les signaux modulés 2ASK, 2PSK, 4PSK, MSK et 2FSK d'autre part, le signal de communication complexe (r) est en sus soumis à une transformation ultérieure non-linéaire de la forme

$$|r(t)|^2 - E\{|r(t)|^2\}$$

avec E $\{|r(t)|^2\}$ égal à la valeur escomptée de $|r(t)|^2$ et que l'apparition de lignes dans le spectre de puissance volumique est considérée comme caractéristique ultérieure pour la présence d'une modulation avec signal cyclostationaire modulant.

24. Procédé selon la revendication 23, caractérisé en ce que en présence de signaux à modulation dure, ces derniers sont, avant la formation des spectres de puissance volumique, transformés par filtrage en signaux à modulation douce et/ou soumis à une transformation ultérieure non-linéaire de la forme

$$r(t) \cdot r(t+\tau)^* - E\{r(t) \cdot r(t+\tau)^*\}$$

avec E $\{r(t) \cdot r(t+\tau)^*\}$ égal à la valeur escomptée de $r(t) \cdot (t+\tau)^*$ et $\tau$ égal ou approximativement égal à la durée symbolique ($T_s = 1/f_s$) dérivée de préférence de la largeur de bande estimée du signal de communication complexe ( r ).

25. Disposition pour la réalisation du procédé selon l'une des revendications précédentes avec un récepteur numérique (2), plusieurs transformateurs (4, 5a, 5b) montés en aval du récepteur (2), pour le signal de communication complexe ( r ) ainsi qu'un classificateur (10), caractérisée en ce que les transformateurs (4, 5a, 5b) et/ou le récepteur numérique (2) sont relies du côté sortie à travers une unité (6 - 8) pour l'estimation de spectres de puissance volumique ($S^{(i)}$ ; i=1, 2, 4) et un détecteur de lignes (9) pour la détection de lignes dans les spectres de puissance ($S^{(i)}$ ; i=1, 2, 4) avec le classificateur (10).

26. Disposition selon la revendication 25, caractérisée en ce que les transformateurs (4, 5a, 5b) sont disposés soit en parallèle ou bien, commutables individuellement à travers un dispositif de commutation (3), entre le récepteur numérique (2) et l'unité (6 - 8) pour l'estimation de spectres de puissance volumiques ($S^{(i)}$ ; i=1, 2, 4).

27. Disposition selon l'une des revendications 25 ou 26, caractérisée en ce que comme transformateurs on prévoit un transformateur linéaire sous forme d'une simple ligne de raccordement (4), un élévateur au carré (5b) et/ou un élévateur à la puissance quatre (5a) et de préférence un (ou plusieurs) autre(s) transformateur(s) qui soumet(tent) le signal de communication complexe (r) (respectivement) à la transformation $|r(t)|^2 - E\{|r(t)|^2\}$ ou (resp.) à la transformation $r(t) \cdot r(t+\tau)^* - E\{r(t) \cdot r(t+\tau)^*\}$ avec E$\{|r(t)|^2\}$ ou E $\{r(t) \cdot r(t+\tau)^*\}$ égal aux valeurs escomptées de $|r(t)|^2$ ou $r(t) \cdot r(t+\tau)$ ou (resp.) à la transformation de l'élévation au carré ($|r|^2$) de la valeur du signal de communication complexe (r).

28. Disposition selon l'une des revendications 25 - 27, caractérisée en ce que l'unité (6 - 8) pour l'estimation de spectres de puissance volumique ($S^{(i)}$ ; i=1, 2, 4) est prévue comme estimateur spectral de périodogrammes avec un transformateur discret Fourier (DFT) (6) fonctionnant de préférence selon le procédé de transformation Fast-Fourier (FFT), une unité (7) pour la formation du carré de la valeur ($|Y|^2$) du signal de sortie DFT ou FFT (Y) et de préférence une unité (8) pour la division du carré de la valeur ($|Y^2|$) par le nombre des valeurs explorées ($N_{FFT}$) de la transformation Fourier respective.

29. Disposition selon l'une des revendications 25 - 28, caractérisé en ce que l'unité (6 - 8) pour l'estimation de spectres de puissance volumique ($S^{(i)}$ ; i=1, 2, 4) ou l'estimateur spectral de périodogrammes (6 - 8) est reliée du côté sortie en sus avec une unité (11) pour l'estimation de la portion spectrale continue ($S_c^{(i)}$ (f)); i=1, 2, 4) des différents spectres de puissance volumique ($S^{(i)}$ ; i=1, 2, 4) et que cette unité (11) est reliée du côté sortie avec l'entrée de commande pour le seuil de détection $\lambda$ (f) du détecteur de lignes (9).

30. Disposition selon la revendication 29, caractérisée en ce que l'unité (11) pour l'estimation de la portion spectrale continue ($S_c^{(i)}$ (f)); i=1, 2, 4) forme la moyenne géométrique ou arithmétique de positions avoisinantes du périodogramme dans le spectre de puissance volumique ($S^{(i)}$ ; i=1, 2, 4) ou dans le périodogramme ou est de préférence prévue comme filtre médian (11).

31. Disposition selon l'une des revendications 25 - 30, caractérisée en ce que l'unité (12) est prévue pour la conversion d'un taux d'alarme incorrect ($P_F$) donné en une valeur seuil (k) et que cette unité (12) est reliée du côté sortie avec l'entrée de commande pour le seuil de détection $\lambda$ (f) du détecteur de lignes (9).

| Transformation | Frequenz der Linien im zugehörigen Leistungsdichtespektrum | Modulationsart | | | | |
|---|---|---|---|---|---|---|
| | $n \in \mathbb{Z} \ ; \ \eta \geq 0$ | 2ASK | 2PSK | 4PSK | MSK | 2FSK |
| $\tau$ | $f_c \doteq \eta f_s$ | · | · | · | · | xx |
| | $f_c$ | xx | · | - | · | · |
| | $f_c \div n f_s \ (n \neq 0)$ | x | - | · · | - | · |
| $\lvert\tau\rvert^{2}$ | $\underline{f} = 0$ | xx | xx | xx | xx | xx |
| | $n f_s \quad (n \neq 0)$ | x | x | x | x | x |
| $\tau^{2}$ | $2(f_c \doteq \eta f_s)$ | - | · | - | - | xx |
| | $2f_c$ | xx | xx | - | - | · |
| | $2f_c \doteq f_s/2$ | - | - | - | xx | · |
| | $2f_c \div n f_s \quad (n \neq 0)$ | x | x | - | - | · |
| | $2f_c \div [(2n \div 1)/2]\, f_s \quad (n \neq 0, -1)$ | - | - | - | x | · |
| $\tau^{4}$ | $4(f_c \doteq \eta f_s)$ | - | · | - | · | xx |
| | $4f_c \doteq f_s$ | x | x | x | xx | - |
| | $4f_c$ | xx | xx | xx | x | - |
| | $4f_c \div n f_s \quad (n \neq 0, 1, -1)$ | x | x | x | x | - |

Fig. 1

Fig. 2

Fig. 3

$e(t)$

Digitaler Empfänger 2

$r(t) = n(t) + j q(t)$ 3

5a $r^4$

5b $r^2$

4

FFT 6

$Y\left(i \cdot \frac{f_A}{N_{FFT}}\right)$

$|Y|^2$ 7

$\frac{1}{N_{FFT}}$ 8

$S^{(i)}$

$S^{(i)}$

Linien-detektor 9

Filter 11

Schwellen-berechner 12

$P_F$

Merkmalvektor $\vec{M}$

Klassi-fikator 10

St

$S_c^{(i)}(f)$

K

Fig. 4